(19) Europäisches Patentamt

European Patent Office

Office européen des brevets

(11) **EP 1 032 154 A2**

## (12) EUROPEAN PATENT APPLICATION

(43) Date of publication:
**30.08.2000 Bulletin 2000/35**

(51) Int. Cl.$^7$: **H04L 5/06**, H04B 7/26

(21) Application number: **00102207.8**

(22) Date of filing: **10.02.2000**

(84) Designated Contracting States:
**AT BE CH CY DE DK ES FI FR GB GR IE IT LI LU
MC NL PT SE**
Designated Extension States:
**AL LT LV MK RO SI**

(30) Priority: **23.02.1999 US 256430**

(71) Applicant: **TRW Inc.
Redondo Beach, California 90278 (US)**

(72) Inventors:
• **Carpenter, Charlotte N.
Redondo Beach, CA 90277 (US)**
• **Chan, Andy
Los Angeles, CA 90034 (US)**
• **Moretti, Vincent C.
Torrance, CA 90501 (US)**

(74) Representative:
**Schmidt, Steffen J., Dipl.-Ing.
Wuesthoff & Wuesthoff,
Patent- und Rechtsanwälte,
Schweigerstrasse 2
81541 München (DE)**

(54) **Configurable multi-rate channelizer for use in multiple data rate applications**

(57)    A configurable multi-rate channelizer (20) is provided to separate an input bandwidth into a plurality of narrowband channels at different data rates, such as 1x, 2x and 4x. The innovative multi-rate channelizer design may contain the same hardware blocks, such as the window presum block 22, the cyclic shift block 24 and the discrete Fourier transform (DFT) block 26 for channelizing both real and complex representations of an input wideband signal into individual channels. However, only some of these hardware blocks may be used while some other hardware blocks may be bypassed depending on the output data rate chosen for an input wideband signal with minimal additional hardware for reconfiguration. For the 1x data rate, all hardware blocks may be used to channelize an input wideband signal into four (4) channels at 1x data rate. For the 2x data rate, most hardware blocks except for a 2-point DFT of the DFT block 26 may be used to channelize an input wideband signal into two (2) channels at 2x data rate. For the 4x data rate, only the window presum block 22 and the 2-point DFT of the DFT block 26 may be used as first and final stages of accumulation for an integrate and dump operation. This way a single channelizer may be reusable for multiple applications while realizing design gate savings.

FIG. 2

**Description**

## BACKGROUND OF THE INVENTION

### Technical Field

The present invention relates to the use of digital filters and the discrete Fourier transform (DFT) for separating an input channel group bandwidth into smaller sections of equally spaced narrowband channels, and more particularly, relates to a configurable multi-rate channelizer for satellite communications applications with different input data rates and different input channel group bandwidths.

### Related Art

Generally, multi-channel wireless communication systems such as satellite communications systems may contain a certain number of transponders for communications over a broad geographical area. Each transponder may be a receiver-transmitter pair. The receiver of a satellite system may be a wideband receiver that may cover a wide range of communication frequencies within an available multi-channel bandwidth. These frequencies may typically be from 5.925 GHz to an upper frequency limit that may depend on the number of channels the satellite system can handle. Channelizers may be used to separate an input wideband signal of a specific spectrum received from an antenna into a plurality of narrowband channels. The wideband signal may carry different channels using different frequency bands, different time slots, different spread spectrum coding, or a combination of any two or more of these techniques. The channelizers may be wideband channelizers and/or narrowband channelizers used to separate a wideband signal into smaller sections of constituent channels. Examples of a wideband spectrum for satellite communications applications may be a 320 MHz channel group comprised of four (4) 80 MHz sub-band channels. Each 80 MHz sub-band channel may be channelized into smaller sections of narrower band channels, such as, for example, four (4) narrowband channels each 20 MHz. The term "wideband" may not be limited to any particular spectral range. Rather, wideband may imply a spectral coverage of at least the useful communication range over which the multi-channel wireless communications system may operate. Narrowband may, on the other hand, imply only a portion of the spectrum, for example, the width of an individual channel. Such channelizers may operate on radio frequency (RF) or baseband, analog or digital signals.

Typically, channelizers for such multi-channel wireless communications systems may contain several design constraints. Such design constraints may often include an inordinate number of hardware components with complexed computation and high energy consumption requirements. A channelizer may be designed for any specific channel group bandwidth and specific data rate. Theoretical basis for such a channelizer may be described in "*Multirate Digital Signal Processing*" by R.E. Crochiere and Rabiner, published in 1983 by Prentice Hall, Englewood Cliffs, New Jersey, which publication is incorporated herein by reference in its entirety. However, once the channelizer may be designed for a specific channel group bandwidth and data rate set, such a channelizer may not be reconfigured and/or adapted for different input data rates and input channel group bandwidths without significant hardware reconstructions. For example, if a channelizer may be designed for separating an input channel group of 80 MHz into two narrowband signals of 40 MHz each, there may be a specific number of hardware components required. Any attempt to reconfigure such a channelizer for a different output such as four narrowband signals of 20 MHz each may undesirably require significant hardware reconstructions, if not wholesale substitutions. Accordingly, there is a need for a configurable channelizer design for use in multiple data rate applications.

## SUMMARY OF THE INVENTION

In accordance with the present invention, an improved configurable channelizer design may be provided for use in wireless communication systems for multiple data rate applications. The improved configurable channelizer design may be provided for efficiently servicing multiple input data rates with minimal additional hardware for reconfiguration while realizing design hardware savings. The configurable multi-rate channelizer may be implemented with an efficient hardware architecture using window presum and discrete Fourier transform techniques to separate an input signal of different channel group bandwidths into a plurality of individual channels at different data rates.

In accordance with one aspect of the present invention, a configurable multi-rate channelizer may be provided for separating successive sets of even and odd data samples of an input signal into individual output channel(s) at a different data rate using parallel window presum and discrete Fourier transform computations in dependence upon a selected mode of channelization such as, for example, a 1x data rate mode for separating successive sets of even and odd data samples of an input signal into a first plurality of individual channels with a spacing of a bandwidth frequency at the 1x data rate, 2x data rate mode for separating successive sets of even and odd data samples of an input signal into a second plurality of individual channels with a spacing of twice the bandwidth frequency at the 2x data rate, and a 4x data rate mode for separating successive sets of even and odd data samples of an input signal into a single channel with a spacing four times the bandwidth frequency at the 4x data rate.

In accordance with another aspect of the present invention, a configurable multi-rate channelizer is provided with a plurality of window presum modules arranged in parallel to receive different ones of successive sets of even and odd, real and imaginary data samples of an input signal for window presum operations in accordance with function coefficients to produce parallel presum outputs; a plurality of cyclic shift modules arranged in parallel to receive respective ones of the parallel presum outputs for phase shift operations in accordance with a number of shifts to produce phase adjusted outputs, wherein the number of shifts is determined by N/GCD(N, M), where GCD(N, M) represents the greatest common divisor of N and M, and the value of each shift is determined by mM*modulo N, where M represents a decimation rate, N represents a discrete Fourier transform (DFT) size and m represents an index variable; and a plurality of discrete Fourier transform (DFT) modules arranged in parallel to receive respective ones of the phase adjusted outputs for discrete Fourier transform (DFT) calculations to produce individual channels of interest.

The window presum modules may contain first window presum circuits arranged to receive respective ones of successive sets of real data samples of even and odd data points for window presum operations in accordance with a first set of function coefficients to produce presum outputs of even and odd data points of real data; and second window presum circuits arranged to receive respective ones of successive sets of imaginary data samples of even and odd data points for window presum operations in accordance with a second set of function coefficients identical to the first set to produce presum outputs of even and odd data points of imaginary data.

Similarly, the cyclic shift modules may contain first 3-point permute modules arranged in parallel to receive respective ones of presum outputs of even and odd data points of real data for phase shift operations in accordance with the number of shifts to produce phase adjusted outputs of even and odd data points of real data; and second 3-point permute modules arranged in parallel to receive respective ones of presum outputs of even and odd data points of imaginary data for phase shift operations in accordance with the number of shifts to produce phase adjusted outputs of even and odd data points of imaginary data.

Likewise, the discrete Fourier transform (DFT) modules may contain first 3-point discrete Fourier transform (DFT) modules arranged to receive respective ones of phase adjusted outputs of even data points of complex data for 3-point transformations to produce first transform outputs of even data points of complex data; and second 3-point discrete Fourier transform (DFT) modules arranged to receive respective ones of phase adjusted outputs of odd data points of complex data for 3-point transformations to produce first transform outputs of odd data points of complex data; and 2-point discrete Fourier transform (DFT) modules arranged to receive respective ones of first transform outputs of even and odd data points of complex data for 2-point transformations to produce individual channels of interest.

In accordance with yet another aspect of the present invention, a configurable multi-rate channelizer may be provided with a plurality of window presum modules, a plurality of cyclic shift modules, and a plurality of discrete Fourier transform (DFT) modules for using window presum and DFT calculations to separate successive sets of even and odd data samples of an input signal into individual channels with a spacing of a bandwidth frequency at a 1x data rate, when a selected mode of channelization indicates the 1x data rate. However, when the selected mode of channelization indicates the 2x data rate, selected ones of the plurality of discrete Fourier transform (DFT) modules may be bypassed while other hardware components may operate concomitantly to separate successive sets of even and odd data samples of an input signal into individual channels with a spacing of twice the bandwidth frequency at a 2x data rate. Likewise, when the selected mode of channelization indicates the 4x data rate, the cyclic shift modules and selected ones of the plurality of discrete Fourier transform (DFT) modules may be bypassed while other hardware components may operate concomitantly to separate successive sets of even and odd data samples of an input signal into a single output channel with a spacing of four times the bandwidth frequency at a 4x data rate.

The window presum modules may include demultiplexers arranged to receive respective ones of successive sets of real and imaginary data samples of even and odd data points to produce parallel outputs of data samples of even and odd data points; shift registers arranged to shift from left to right data samples of even and odd data points for distributed arithmetic calculations; and distributed arithmetic modules arranged to receive data samples of even and odd data points provided from the shift registers for performing filter-tap multiplications and data point summations to produce presum outputs of even and odd data points of real and imaginary data.

The distributed arithmetic modules may include logic devices arranged in parallel to receive data samples of even and odd data points provided from the shift registers; memory devices arranged to temporarily store logic outputs from the logic devices for filter-tap multiplications in accordance with the function coefficients; and shift-and-adders arranged to perform data point summations to produce presum outputs of even and odd data points of real and imaginary data.

The present invention is more specifically described in the following paragraphs by reference to the drawings attached only by way of example.

## BRIEF DESCRIPTION OF THE DRAWINGS

A more complete appreciation of the present invention, and many of the attendant advantages thereof, will become readily apparent as the same becomes better understood by reference to the following detailed description when considered in conjunction with the accompanying drawings in which like reference symbols indicate the same or similar components, wherein:

FIG. 1 illustrates a block diagram of major components of a receiver of a wireless communications system;

FIG. 2 illustrates a functional block diagram of a configurable multi-rate channelizer operable to separate an input wideband signal of different input data rates and input channel group bandwidths for use in a wireless communications system constructed according to the principles of the present invention;

FIGs. 3A to 3D respectively illustrate frequency spectrums produced by the multi-rate channelizer operable to separate an input wideband signal into individual channels at a first (1x) data rate according to the principles of the present invention;

FIGs. 4A to 4D respectively illustrate frequency spectrums produced by the multi-rate channelizer operable to separate an input wideband signal into individual channels at a second (2x) data rate according to the principles of the present invention;

FIGs. 5A to 5B respectively illustrate frequency spectrums produced by the multi-rate channelizer operable to separate an input wideband signal into individual channels at a third (4x) data rate according to the principles of the present invention;

FIG. 6 illustrates a block level diagram of the multi-rate channelizer operable to separate an input wideband signal-into individual channels at 1x data rate according to the principles of the present invention;

FIG. 7 illustrates a window presum function containing respectively real and imaginary data word samples of the multi-rate channelizer operable to separate an input wideband signal into individual channels at 1x data rate according to the principles of the present invention;

FIG. 8 illustrates a window presum operation for even and odd processing of respectively real and imaginary data word samples of the multi-rate channelizer operable to separate an input wideband signal into individual channels at 1x data rate according to the principles of the present invention;

FIG. 9 illustrates a window presum hardware implementation of a real or imaginary window presum module of a window presum block of the multi-rate channelizer operable to separate an input wideband signal into individual channels at 1x data rate according to the principles of the present invention;

FIG. 10 illustrates a block level diagram of a 3-point permute module for even and odd processing of respective real and imaginary data word samples of the multi-rate channelizer operable to separate an input wideband signal into individual channels at 1x or 2x data rate according to the principles of the present invention;

FIG. 11 illustrates an internal diagram of a discrete Fourier transform (DFT) block for even and odd processing of respective real and imaginary data word samples of the multi-rate channelizer operable to separate an input wideband signal into individual channels at 1x data rate according to the principles of the present invention;

FIG. 12 illustrates a block level diagram of the multi-rate channelizer operable to separate an input wideband signal into individual channels at 2x data rate according to the principles of the present invention;

FIG. 13 illustrates a window presum function containing respectively real and imaginary data words of the multi-rate channelizer operable to separate an input wideband signal into individual channels at 2x data rate according to the principles of the present invention;

FIG. 14 illustrates a window presum operation for even and odd processing of respectively real and imaginary data words of the multi-rate channelizer operable to separate an input wideband signal into individual channels at 2x data rate according to the principles of the present invention;

FIG. 15 illustrates a window presum hardware implementation of a real or imaginary window presum module of a window presum block of the multi-rate channelizer operable to separate an input wideband signal into individual channels at 2x data rate according to the principles of the present invention;

FIG. 16 illustrates an internal diagram of a discrete Fourier transform (DFT) block for even and odd processing of respective real and imaginary data word samples of the multi-rate channelizer operable to separate an input wideband signal into individual channels at 2x data rate according to the principles of the present invention;

FIG. 17 illustrates a block level diagram of the multi-rate channelizer operable to separate an input wideband signal into individual channels at 4x data rate according to the principles of the present invention;

FIG. 18 illustrates an integrate and dump operation for even and odd processing of respectively real and imaginary data words of the multi-rate channelizer operable to separate an input wideband signal into individual channels at 4x data rate according to the principles of the present invention;

FIG. 19 illustrates a window presum hardware implementation of a real or imaginary window presum module of a window presum block of the multi-rate channelizer operable to separate an input signal into individual channels at 4x data rate according to the principles of the present invention; and

FIG. 20 illustrates a comparison of an internal diagram of each 2-point DFT module of the DFT block for even and odd processing of respective real and imaginary data word samples of the multi-rate channelizer operable to separate an input signal into individual channels at 1x data rate and 4x data rate according to the principles of the present invention.

## DETAIL DESCRIPTION OF EMBODIMENTS OF THE INVENTION

Before describing in detail the particular improved configurable multi-rate channelizer for satellite communications applications in accordance with the present invention, it should be observed that the present invention resides primarily in a novel structural combination of commercially available communications and signal processor circuits, and not in the particular detailed configurations thereof. Accordingly, the block diagram illustrations of the Figures do not necessary represent the mechanical and/or electrical structural arrangement of an exemplary communications system, but are primarily intended to illustrate the major structural components of such an exemplary system in a convenient functional grouping that is readily apparent to those skilled in the art having the benefit of the description herein.

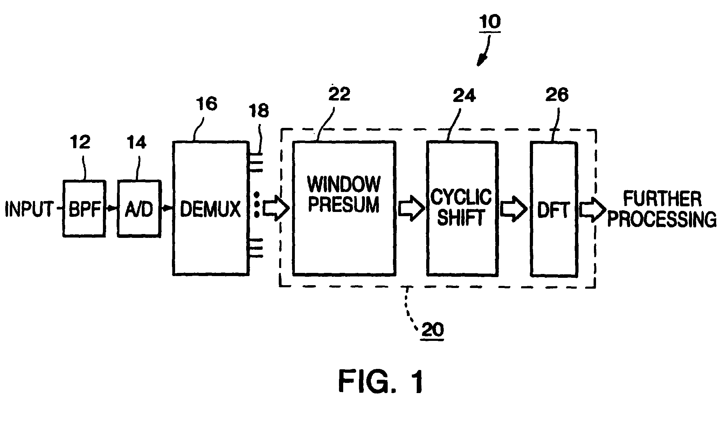

Referring now to FIG. 1, which illustrates a block diagram of major components of a receiver of a wireless communications system. Typically, an exemplary receiver of a wireless communications system may include a front end, down-conversion section (not shown) which may intercept electromagnetic radiation within the frequency band of interest, convert the intercepted electromagnetic radiation into an electrical signal, and then down-convert such an electrical signal into a baseband signal containing the contents of all communication channels currently operative in the communication system or network of interest. Several types of input devices may be used for intercepting or capturing electromagnetic radiation for subsequent input and down conversion in the exemplary receiver. Examples of such input devices may include antennas, waveguides, coaxial cables, optical fibers, or infrared frequency transducers.

As shown in FIG. 1, such an exemplary receiver may comprise a bandpass filter (BPF) 12, an analog-to-digital (A/D) convener 14, a demultiplexer (DEMUX) 16, and at least one channelizer 20 and other types of signal processing circuits (not shown). The bandpass filter (BPF) 12 of a predetermined bandwidth may be used to filter an input baseband signal and pass a wideband signal of a selected frequency spectrum. The selected frequency spectrum of interest may be 80MHz including a plurality of available channels, but the present invention may not be limited to this frequency range. The A/D converter 14 may sample the wideband signal to produce a digitized signal containing a plurality of channels (i.e., N channels). The digitized signal may be represented in a series of digital samples. Each digital sample may comprise a multiple bit word such as 11-bit words. A serial stream of multiple bit word samples produced by the A/D converter 14 may be input to the demultiplexer 16 which may produce a plurality of demultiplexed data outputs 18. The demultiplexer 16 may function as a multiple tapped delay line with each parallel output being outputted from a different tap of the delay line. The demultiplexed data outputs 18 of the demultiplexer 16 may be applied to the channelizer 20 constructed according to the principles of the present invention for separation (translation) into a plurality of narrowband signals, where each narrowband signal may convey one of the channels conveyed by the wideband signal. The demultiplexed data outputs 18 of the demultiplexer 16 may be converted from real to complex data representations by, for example, a tuner performing downconversion of a spread spectrum transmission. Each channelizer 20 may be implemented by several hardware blocks including a window presum block 22, a cyclic shift block 24, and a discrete Fourier transform (DFT) block 26 which may be configurable and which may use window presum (WP) operations and discrete Fourier transform (DFT) engines for purposes of receiving an input wideband signal of different input channel groups and separating such an input wideband signal into different sets of narrowband signals of different data rates for subsequent processing, via other types of signal processing circuits.

The innovative multi-rate channelizer design of the present invention may contain the same hardware blocks, such as the window presum block 22, the cyclic shift block 24 and the discrete Fourier transform (DFT) block 26 for channelizing both real and complex representations of the input wideband signal into individual channels. The window presum block 22 may be used to process both real and imaginary (complex) representations of an input wideband signal using window presum (WP) operations. The cyclic shift block 24 may be used for phase adjustment of the presum word outputs from the window presum block 22. The DFT block 26 may then be used to transform the phase adjusted outputs from the cyclic shift block 24 into individual channel(s) at a different rate. However, only some of these hardware blocks may be used while some other hardware blocks may be bypassed depending on output data rate chosen for an input wideband signal with minimal additional hardware for reconfiguration. This way a single channelizer may be reusable for multiple applications while realizing design gate savings.

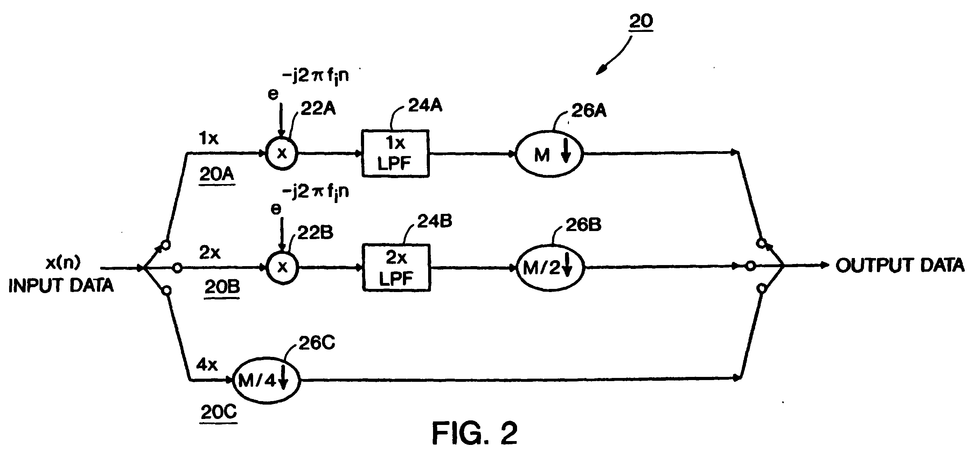

Turning now to FIG. 2, a functional diagram of a configurable multi-rate channelizer 20 constructed according to the principles of the present invention is illustrated. As intended by the present invention, each multi-rate channelizer 20 may be designed with at least three selectable channelization modes of operation with different functional processing paths which may be used to separate an input wideband signal into individual channels at a different data rate. For purposes of illustration, the output data rates may be referred to as 1x, 2x, and 4x respectively. An input data rate may be set, for example, at 120 Mgbits/second. If the operation of the multi-rate channelizer 20 may be set for 1x data rate mode, the output data rate of 5.45 Mgbits/second may be produced. If the operation of the multi-rate channelizer 20 may be set for 2x data rate mode, the output data rate of 10.91 Mgbits/second (twice faster than 1x mode) may be produced. Likewise, if the operation of the multi-rate channelizer 20 may be set for 4x data rate mode, the output data rate of 21.82 Mgbits/second (twice faster than 2x mode) may be produced. The channelizer 20 may be considered as a narrowband channelizer for separating an input wideband signal to a number of smaller channels. For example, if an input wideband signal may exhibit a frequency spectrum of 80 MHz, then the channelizer 20 may separate such a 80MHz input-wideband signal into different sets of narrowband (sub) channels depending upon the set channelization mode of operation.

The channelization mode of operation may be set as 1x, 2x or 4x using, for example, register bits of a configuration word format for each channel in use. These register bits may be used to indicate either 1x, 2x or 4x channelization mode of operation. For example, two (2) register bits of a configuration word format may be represented as "00" for the 1x data rate, "01" for the 2x data rate, and "11" for the 4x data rate for configuration of the channelizer hardware. For 1x mode of operation, the multi-rate channelizer 20 may serve as a 1x channelizer to separate an input wideband signal into, for example, four (4) sub-channels with a spacing of a bandwidth frequency (BW Hz). All processing hardware blocks, such as the window presum block 22, the cyclic shift block 24 and the DFT block 26 as shown in FIG. 1 may be used to produce four (4) sub-channels at 1x data rate. For 2x mode of operation (twice faster than 1x mode), the multi-rate channelizer 20 may serve as a 2x channelizer to separate an input wideband signal into, for example, two sub-channels with a spacing of twice the bandwidth frequency (2*BW Hz). The 2-point DFT of the discrete Fourier transform (DFT) block 26 may be bypassed, while all other processing hardware blocks, such as the window presum block 22, the cyclic shift block 24, and the 3-point DFT of the discrete Fourier transform (DFT) block 26 as shown in FIG. 1 may be concomitantly used to produce two (2) channels at 2x data rate. For 4x mode of operation (twice faster than 2x mode), the multi-rate channelizer 20 may serve as a 4x channelizer to separate an input wideband signal into one channel with a spacing of four times the bandwidth frequency (4*BW Hz). The cyclic shift block 24 and the 3-point DFT of the discrete Fourier transform (DFT) block 26 may be bypassed, while the window presum block 22 and the 2-point DFT of the discrete Fourier transform (DFT) block 26 as shown in FIG. 1 may be used as first and final stages of accumulations to produce a single channel at 4x data rate.

As shown in FIG. 2, the multi-rate channelizer 20 may contain different functional processing paths for the corresponding selectable 1x, 2x, and 4x channelization modes of operation which may be used to separate an input wideband signal into individual channels of a different data rate, such as, for example, 1x, 2x, and 4x, where x may correspond to a predetermined data rate. Digital samples of an input wideband signal of 1x data rate may be channelized into four (4) sub-channels via a 1x processing path 20A using a complex multiplier 22A, a lowpass filter 24A and a down sampling convener 26A. Similarly, the input data of 2x data rate may be channelized into two (2) sub-channels via a 2x processing path 20B using complex multiplier 22B, lowpass filter 24B and down sampling converter 26B. The input data of 4x data rate may need no channelization, since it is contained in a single channel. Consequently, the input data of 4x data rate may be down sampled via a 4x processing path 20C using down sampling convener 22C for integrate and dump operations.

A frequency shift block, such as a fs/4 shift for 1x data rate and a fs/2 shift for 2x data rate, may be additionally installed to the multi-rate channelizer 20, or may be installed as part of the multi-rate channelizer 20 via the processing paths 20A and 20B to place the center frequencies of the channels of an input spectrum of the 1x data rate and the 2x data rate in the center of discrete Fourier transform (DFT) bins, respectively. However, no frequency shifter may be required for 4x data rate application. DFT bins may correspond to available channels of an input spectrum. For example, if an input spectrum of 120 MHz for 1x data rate may contain four (4) channels with a 20 MHz bandwidth (BW) spacing, the DFT bins may be six (6) obtained from a product of 120 MHz/20 MHz. Since only four (4) channels may be contained in the input spectrum of 1x data rate, two DFT bins may not be used. Likewise, if an input spectrum of 120 MHz for 2x data rate may contain two (2) channels with a 40 MHz bandwidth (BW) spacing, the DFT bins may be three (3) obtained from a product of 120 MHz/40 MHz. Since only two (2) channels may be contained in the input spectrum of 2x data rate, one DFT bin may not be used.

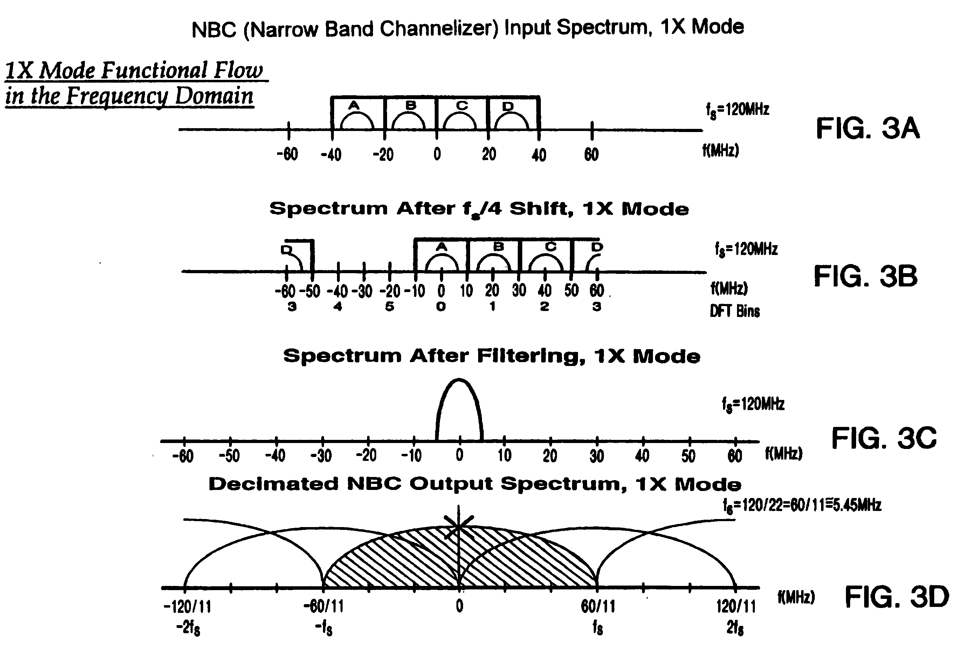

Referring to FIGs. 3A-3D, a functional flow of an input spectrum of 1x data rate in the frequency domain of the multi-rate channelizer 20 according to the principles of the present invention is illustrated. When an input spectrum of 120 MHz for the 1x data rate containing four (4) channels, for example, A, B, C, D with a 20 MHz spacing may be switched to a 1x processing path 20A as shown in FIG. 3A, these channels may be shifted to the center of the DFT bins by way of a fs/4 (frequency) shift, as shown in FIG. 3B. The input spectrum of 1x data rate may be multiplied (modulated) by a complex exponential $(e^{-j2\pi f_i n})$ where $f_i$ is the center frequency of the channel of interest by way of a complex multiplier 22A to obtain the channel of interest in a baseband frequency. Each channel of interest from the input spectrum may then be lowpass filtered by way of a 1x lowpass filter 24A, as shown in FIG. 3C. The 1x lowpass filter 24A may be used to eliminate the interfering channels and amplify the channel of interest. Each channel of interest may be then critically sampled with a down-sampling rate of M (where M represents an integer, such as 22) by way of a down sampling convener 26A, as shown in FIG. 3D. As a result, four different channels A, B, C, D may be separated from the input spectrum as shown in FIG. 3A, and may be provided as parallel outputs by the multi-rate channelizer 20 for subsequent processing, via other types of signal processing circuits.

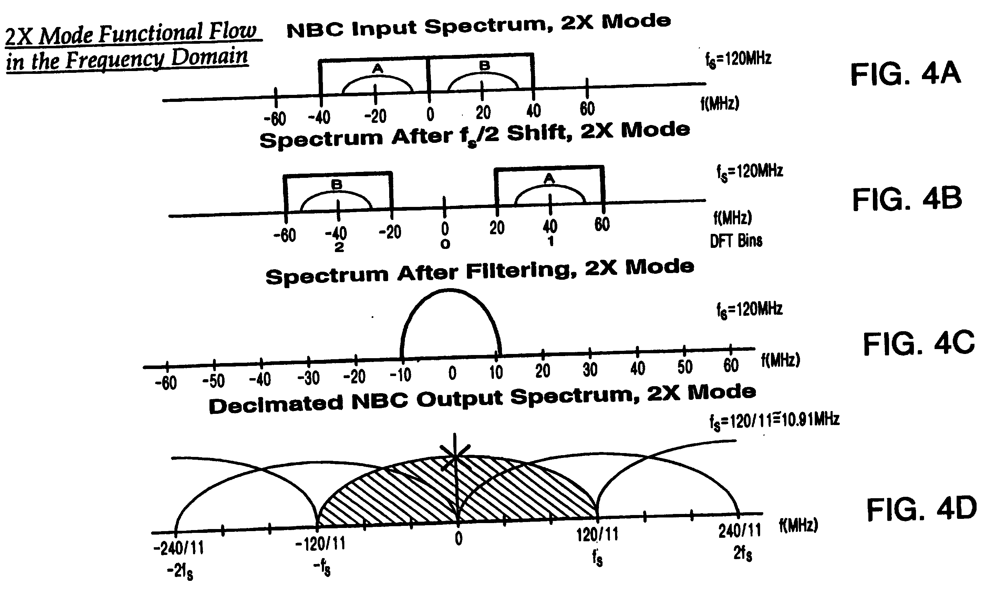

FIGs. 4A-4D illustrate a functional flow of an input spectrum of 2X data rate in the frequency domain of the multi-rate channelizer 20 according to the principles of the present invention. When an input spectrum of 120 MHz for 2x data rate containing two (2) channels, for example, A and B with a 40 MHz spacing may be switched to a 2X processing path 20B as shown in FIG. 4A, these channels may be shifted to the center of the DFT bins by way of a fs/2 (frequency) shift, as shown in FIG. 4B. The input spectrum of 2X data rate may be multiplied (modulated) by a complex exponential ($e^{-j2\pi f_i n}$) by way of a complex multiplier 22B to obtain the channel of interest in a baseband frequency. Each channel of interest from the input spectrum may ten be filtered by way of a 2x lowpass filter 24B, as shown in FIG. 4C. The 2x lowpass filter 24B may be used to eliminate the interfering channels and amplify the channel of interest. Each channel of interest may then be critically sampled at a down-sampling rate of N/2 and decimated by way of a down sampling converter 26B, as shown in FIG. 4D. As a result, two different channels A and B may be separated from the input spectrum as shown in FIG. 4A, and may be provided as parallel outputs by the multi-rate channelizer 20 for subsequent processing, via other types of signal processing circuits.

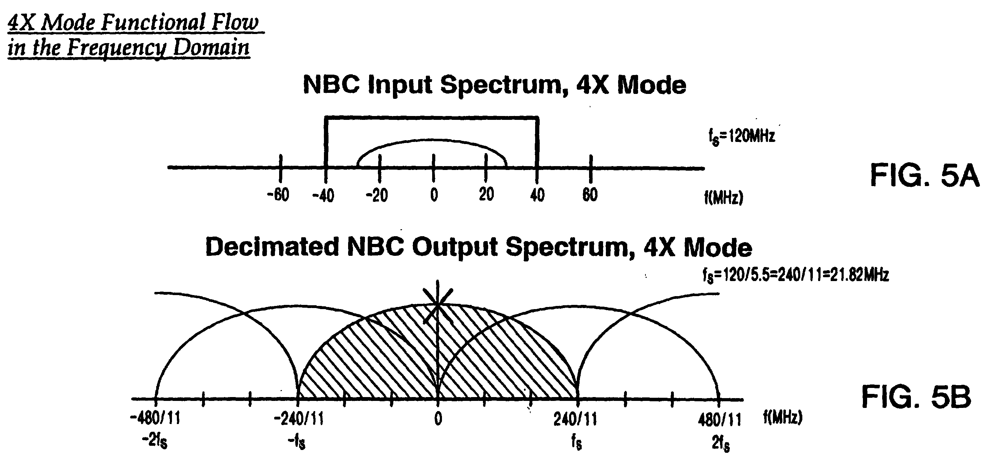

FIGs. 5A-5B illustrate a functional flow of an input spectrum of 4x data rate in the frequency domain of the multi-rate channelizer 20 according to the principles of the present invention. When an input spectrum of 120 MHz for 4x data rate containing a single channel may be switched to a 4x processing path 20C as shown in FIG. 5A, the channel contained therein may be directly critically sampled at a down-sampling rate of N/4 and decimated by way of a down sampling converter 26C using integrate and dump operations, as shown in FIG. 5B. As a result, the same channel from the input spectrum may be provided as a single output by the multi-rate channelizer 20 for subsequent processing, via other types of signal processing circuits.

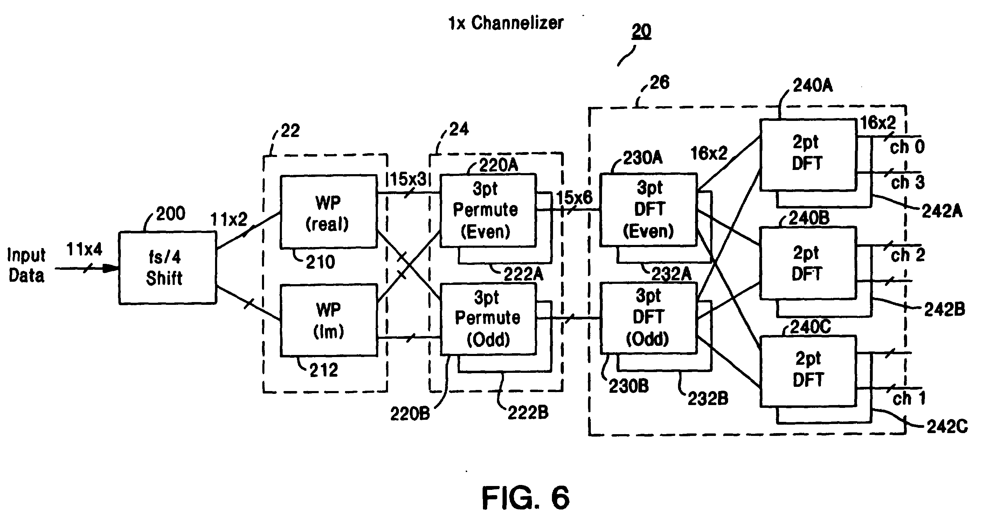

FIG. 6 illustrates a block diagram of the hardware implementation of the configurable multi-rate channelizer 20 operable to separate an input spectrum into individual channels at 1x data rate according to the principles of the present invention. As shown in FIG. 6, the 1x channelizer may comprise a window presum block 22, a cyclic shift block 24, and a discrete Fourier transform (DFT) block 26. A fs/4 shift block 200 may be installed as part of the configurable multi-rate channelizer 20 to translate the center frequencies of the channels contained in the input spectrum to the center of the DFT bins. The fs/4 shift block 200 may be used for shifting input data of real and imaginary to place those channels of interest in the center of the DFT bins. The window presum block 22 may contain a plurality of window presum circuits implemented for parallel real and imaginary data operations to obtain a high throughput data rate. Likewise, the cyclic shift block 24 and the discrete Fourier transform (DFT) block 26 may contain a plurality of individual permute circuits and discrete Fourier transform circuits for parallel real and imaginary data operations. Parallel window presum and DFT architecture of the multi-rate channelizer 20 according to the present invention may offer several advantages, which may be particularly useful for satellite communications applications. First, the parallel processing operations of window presum and DFT circuits may minimize the speed of an operating clock which may advantageously enable efficient deployment of ASIC (application specific integrated circuit) hardware. Second, the power consumption may be reduced because inexpensive and compact integrated circuit technologies such as CMOS (complementary MOSFET) may be used for window presum and DFT operations. Lastly, parallel window presum and DFT circuits may be conveniently packaged in modular forms.

As shown in FIG. 6, the window presum block 22 may contain a pair of identical window presum modules 210 and 212 for processing real data and imaginary data. The first window presum module 210 may process the real data, while the second window presum module 212 may process the imaginary data. Similarly, the cyclic shift block 24 may contain a pair of identical 3-point permutes of even and odd for corresponding real data 220A, 220B and imaginary data 222A, 222B. Likewise, the DFT block 26 may contain a pair of 3-point DFT modules of even and odd for corresponding real data 230A, 230B and imaginary data 232A, 232B and three successive 2-point DFT modules for corresponding real data 240A, 240B, 240C and imaginary data 242A, 242B, 242C. Shadow blocks 222A-222B, 232A-232B, and 242A-242C may indicate identical hardware to process the imaginary data. It should be noted here that the number of window presum modules, permutes and DFT modules as shown in FIG. 6 is only for illustrative purposes, and may be varied in accordance with parallel processing requirements.

For the 1x mode of operation, all processing hardware blocks, such as the window presum block 22, the cyclic shift block 24 and the DFT block 26 as shown in FIG. 1 may be concomitantly used to process both real data and imaginary data in order to produce four (4) sub-channels at 1x data rate. However, for different channelization modes, such as 2x and 4x modes of operation-as subsequently described in detail, some of these hardware blocks may be bypassed because they may not be needed. Input control data from the configuration word format may be used to inform the multi-rate channelizer 20 to automatically process input data (both real and imaginary) in a different channelization mode of operation without using some of these hardware blocks. For example, for the 2x mode of operation, the 2-point DFT modules 240A-240C, 242A-242C of the DFT block 26 may be bypassed during channelization to produce two (2) individual channels at 2x data rate. For the 4x mode of operation, the 3-point permutes 220A, 220B, 222A, 222B of the cyclic shift block 24 and the 3-point DFT modules 230A, 230B, 232A, 232B of the DFT block 26 may be bypassed during integration and dump operations to produce a channel output at 4x data rate.

Each window presum module 210, 212 of the window presum block 22 may be used to process a sequence of word samples of even and odd input data (real and imaginary) within a presum window by multiplying each word sample by a corresponding window presum function coefficient and summing the resultant multiplication products to produce a sum of the multiplication products. The summed multiplication products, after further processing via the cyclic shift block 24 and the DFT block 26, may be provided as individual channels. For example, a sequence of twenty two (22) samples of 11-bit word input data (real and imaginary data) may be multiplied by preassigned window presum function coefficients to produce an output summation which may be subsequently processed into one of the N output channels. The window presum block 22 may have M inputs and N outputs, where M may represent a decimation rate, and N may represent a discrete Fourier transform (DFT) size and the number of possible individual channels. The presum window may be divided into equal sub parts. Corresponding word samples of equal sub parts of the window may be summed after multiplication by preassigned window presum function coefficients to produce the presum output.

The N parallel outputs from the window presum block 22 may be applied to the cyclic shift block 24, which may adjust the phase of the parallel resultant summation for processing into each channel by discrete Fourier transform (DFT) calculations. The cyclic shift block 24 may shift the resultant N word outputs from the window presum block 22 by a number of shifts. The number of shifts may be determined by computing the value of the relationship N/GCD(N, M) and the value of each shift may be determined by computing the value of the relationship mM*modulo N or -mM*modulo N. The variable m may indicate an output index variable which may range from zero upward. The pair 3-point permutes 220A and 220B for even and odd data processing of the cyclic shift block 24 may be used to adjust the phase of real data word outputs from the real window presum module 210 of the window presum block 22. Similarly, the pair of 3-point permutes 222A and 222B for even and odd data processing of the cyclic shift block 24 may be used to adjust the phase of imaginary data word outputs from the imaginary window presum module 212 of the window presum block 22. The phase adjusted outputs from the cyclic shift 24 may be applied to the discrete Fourier transform (DFT) block 26 for transformation into the N individual channels at 1x data rate.

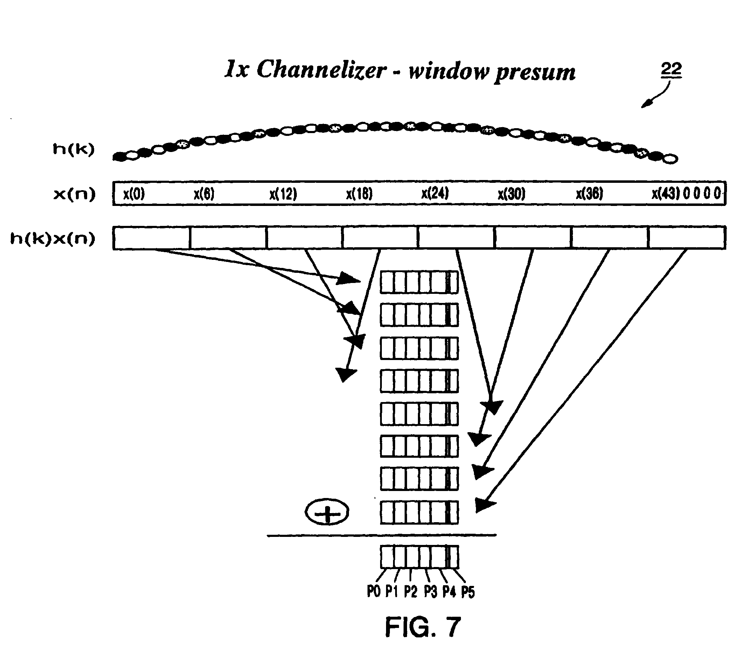

Referring now to FIG. 7, an exemplary window presum function for respectively real and imaginary data words of the window presum modules 210 and 212 of the multi-rate channelizer 20 operable to separate an input wideband signal into individual channels at 1x data rate according to the principles of the present invention is illustrated. For example, if the down-sampling rate M may be set at twenty two (22), twenty two (22) word samples of input data x(n) may be processed during each cycle. The duration of a cycle depends on the number of bits processed per clock cycle. If each word sample may contain eleven (11) bits, then twenty two (22) word samples of input data may be windowed by a 44-tap filter h(k) and then processed at every eleven (11) clock cycles. In other words, at each 11 clock cycle period, 22 data samples may be windowed by both the rising edge and falling edge of the 44-tap filter. The rising edge windowed results may be held for 11 clock cycles, while the falling edge windowed results may be added by the corresponding rising edge windowed results from the previous 11 clock cycles. The samples of forty four (44) individual words of input data may be shifted from left to right through shift registers (not shown) in groups of twenty two (22) of each window presum modules 210 and 212 which may contain a number of subparts (DFT bins). The number of 11-bit word samples per subpart (the DFT size) may correspond to the number N of output channels. For example, if the DFT bins may be set at six (6) for 1x data rate, then the number of 11-bit word samples per subpart may be set at six (6) as shown in FIG. 7 with reference to x(0), x(6), x(12), x(18), x(24), x(30), x(36) and x(42). Each subpart which may contain six (6) 11-bit data word samples of real and imaginary data stored in the shift registers in groups of 22 of each window presum modules 210 and 212 may be multiplied with a window presum function coefficient to produce the sum of the multiplication products P0, P1, P2, P3, P4, and P5 for subsequent cyclic shift and DFT operations. The multiplication products P0, P1, P2, P3, P4, and P5 may be determined based on the assumption that H may be 1x filter tap value vector, H = [h0, h1, h2, h3 ... h43], m may be the window presum output index, and x(n) may be input data (real or imaginary). Such multiplication or sum of products (SOPs) P0, P1, P2, P3, P4, and P5 for even and odd processing may be obtained as follows:

$$P0(m) = [x(0+22m)\ x(6+22m)\ x(12+22m)\ x(18+22m)]^T\ [h0\ h6\ h12\ h18]^T$$
$$+[x(24+22m)\ x(30+22m)\ x(36+22m)\ x(42+22m)]\ [h24\ h30\ h36\ h42]$$

$$P1(m) = [x(1+22m)\ x(7+22m)\ x(13+22m)\ x(19+22m)]^T\ [h1\ h7\ h13\ h19]^T$$
$$+[x(25+22m)\ x(31+22m)\ x(37+22m)\ x(43+22m)]\ [h25\ h31\ h37\ h43]$$

$$P2(m) = [x(2+22m)\ x(8+22m)\ x(14+22m)\ x(20+22m)]^T\ [h2\ h8\ h14\ h20]^T$$
$$+[x(26+22m)\ x(32+22m)\ x(38+22m)\ 0]\ [h25\ h32\ h38\ 0]$$

$$P3(m) = [x(3+22m)\ x(9+22m)\ x(15+22m)\ x(21+22m)]\ [h3\ h9\ h15\ h21]^T{}^T$$
$$+[x(27+22m)\ x(33+22m)\ x(39+22m)\ 0]\ [h27\ h33\ h39\ 0]$$

$$P4(m) = [x(4+22m)\ x(10+22m)\ x(16+22m)\ 0]\ [h4\ h10\ h16\ 0]^T{}^T$$
$$+[x(22+22m)\ x(28+22m)\ x(34+22m)\ x(40+22m)]\ [h22\ h28\ h34\ h40]$$

$$P5(m)= [x(5+22m)\ x(11+22m)\ x(17+22m)\ 0]\ [h5\ h11\ h17\ 0]^T{}^T$$
$$+[x(23+22m)\ x(29+22m)\ x(35+22m)\ x(41+22m)]\ [h23\ h29\ h35\ h41]$$

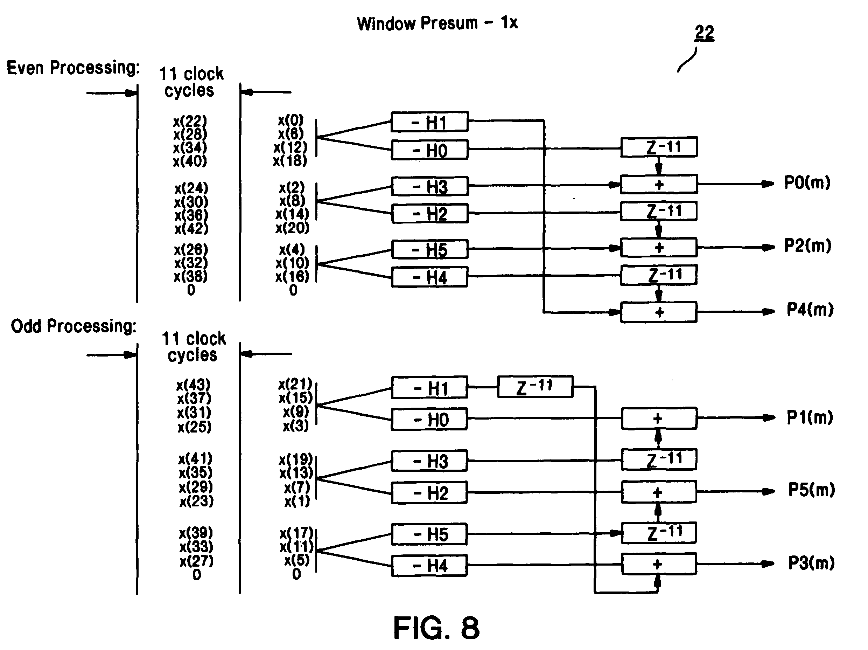

FIG. 8 illustrates a window presum operation for even and odd processing of respectively real and imaginary data word samples of the multi-rate channelizer 20 operable to separate an input wideband signal into individual channels at 1x data rate according to the principles of the present invention. First, the specific filter tap coefficient vectors H0, H1, H2, H3, H4 and H5 may be defined as follows:

$$H0 = [h0\ h6\ h12\ h18]^T$$

$$H1 =[h22\ h29\ h34\ h40]^T$$

$$H2 = [h2\ h8\ h14\ h20]^T$$

$$H3 = [h24\ h30\ h36\ h42]^T$$

$$H4 = [h4\ h10\ h16\ 0]^T$$

$$H5 = [h26\ h32\ h38\ 0]^T$$

The input data may be shifted from left to right through shift registers in groups of 22 data samples. The even presum may receive 11 even points, and the odd presum may receive 11 odd point. The sum of products (SOPs) P0, P2 and P4 for even presum processing of respective real and imaginary data word samples may be obtained by taking the inner product of the input data x(n) in groups of 22 data samples and the specific filter tap coefficient vectors H0, H1, H2, H3, H4 and H5 as follows:

$$P0(m) = [x(0+22m)\ x(6+22m)\ x(12+22m)\ x(18+22m)]*H0\ +[x(24+22m)\ x(30+22m)\ x(36+22m)\ x(42+22m)]*H3$$

$$P2(m) = [x(2+22m)\ x(8+22m)\ x(14+22m)\ x(20+22m)]*H2\ +[x(26+22m)\ x(32+22m)\ x(38+22m)0]\ *H5$$

$$P4(m) = [x(4+22m)\ x(10+22m)\ x(16+22m)\ 0]*H4\ +[x(22+22m)\ x(28+22m)\ x(34+22m)\ x(40+22m)]*H1$$

Basically, P0(m) may be obtained by multiplying a first set of data point x(0), x(6), x(12) and x(18) with an initial filter tap coefficient vector H0, a next set of data points x(24); x(30), x(36) and x(42) with a fourth filter tap coefficient vector H3, and adding the multiplication product after delaying the former multiplication product by an eleven clock cycle delay $Z^{-11}$. Similarly, P2(m) may be obtained by multiplying another set of data point x(2), x(8), x(14) and x(20) with a third filter tap coefficient vector H2, multiplying a next set of data points x(26), x(32) and x(38) with a sixth filter tap coefficient vector H5, and adding the multiplication products after delaying the former multiplication product by an eleven clock cycle delay $Z^{-11}$. Likewise, P4(m) may be obtained by multiplying data point x(4), x(10) and x(16) with a fifth filter tap coefficient vector H4, multiplying data point x(22), x(28), x(34) and x(40) with a second filter tap coefficient vector H1, and adding the multiplication product after delaying the former multiplication product by an eleven clock cycle delay $Z^{-11}$.

The sum of products (SOPs) P1, P3, and P5 for odd presum processing of respective real and imaginary data word samples may be obtained as follows:

$$P1(m) = [x(19+22m)\ x(13+22m)\ x(7+22m)\ x(1+22m)]*[h(19)\ h(13)\ h(7)\ h(1)]^T{}^T$$
$$+[x(43+22m)\ x(37+22m)\ x(31+22m)\ x(25+22m)]*[h(43)\ h(37)\ h(31)\ h(25)]$$

$$P3(m) = [x(21+22m) \ x(15+22m) \ x(9+22m) \ x(3+22m)]^*[h(21) \ h(15) \ h(49) \ h(3)]^{T \ T}$$
$$+[x(39+22m) \ x(33+22m) \ x(27+22m) \ 0]^*[h(39) \ h(33) \ h(27) \ 0]$$

$$P5(m) = [x(17+22m) \ x(11+22m) \ x(5+22m) \ 0]^*[h(17) \ h(11) \ h(5) \ 0]^{T \ T}$$
$$+[x(41+22m) \ x(35+22m) \ x(29+22m) \ x(23+22m)]^*[h(41) \ h(35) \ h(29) \ h(23)]$$

Since the filter is symmetric, i.e., $h(k) = h(43-k)$,

$$P1(m) = (x(19+22m) \ x(13+22m) \ x(7+22m) \ x(1+22m)]^*[h(24) \ h(30) \ h(36) \ h(42)]^{T \ T}$$
$$+[x(43+22m) \ x(37+22m) \ x(31+22m) \ x(25+22m)]^*[h(0) \ h(6) \ h(12) \ h(18)]$$

$$P3(m) = [x(21+22m) \ x(15+22m) \ x(9+22m) \ x(3+22m)]^*[h(22) \ h(28) \ h(34) \ h(40)]^{T \ T}$$
$$+[x(39+22m) \ x(33+22m) \ x(27+22m) \ 0]^*[h(4) \ h(10) \ h(16) \ 0]$$

$$P5(m) = [x(17+22m) \ x(11+22m) \ x(54+22m) \ 0]^*[h(26) \ h(32) \ h(38) \ 0]^{T \ T}$$
$$+[x(41+22m) \ x(35+22m) \ x(29+22m) \ x(23+22m)]^*[h(2) \ h(8) \ h(14) \ h(20)]$$

Therefore,

$$P1(m) = [x(19+22m) \ x(13+22m) \ x(7+22m) \ x(1+22m)]^*H3 \ +[x(43+22m) \ x(37+22m) \ x(31+22m) \ x(25+22m)]^*H0$$

$$P3(m) = [x(21+22m) \ x(15+22m) \ x(9+22m) \ x(3+22m)]^*H1 \ +[x(39+22m) \ x(33+22m) \ x(27+22m) \ 0]^*H4$$

$$P5(m) = [x(17+22m) \ x(11+22m) \ x(5+22m) \ 0]^*H5 \ +[x(41+22m) \ x(35+22m) \ x(29+22m) \ x(23+22m)]^*H2$$

P1(m) may be obtained by multiplying a first set of data points x(19), x(13), x(7) and x(1) with the fourth filter tap coefficient vector H3, multiplying a next set of data points x(43), x(37), x(31) and x(25) with the initial filter tap coefficient vector H0, and adding the multiplication products after delaying the former multiplication product by an eleven clock cycle delay $Z^{-11}$. Similarly, P3(m) may be obtained by multiplying another set of data points x(21), x(15), x(9) and x(3) with the second filter tap coefficient vector H1, multiplying a next set of data points x(39), x(33) and x(27) with the fifth filter tap coefficient vector H4, and adding the multiplication products after delaying the former multiplication product by an eleven clock cycle delay $Z^{-11}$. Likewise, P5(m) may be obtained by multiplying data points x(17), x(11) and x(5) with the sixth filter tap coefficient vector H5, multiplying data points x(41), x(35), x(29) and x(23) with the third filter tap coefficient vector H2, and adding the multiplication products after delaying the former multiplication product by an eleven clock cycle delay $Z^{-11}$.

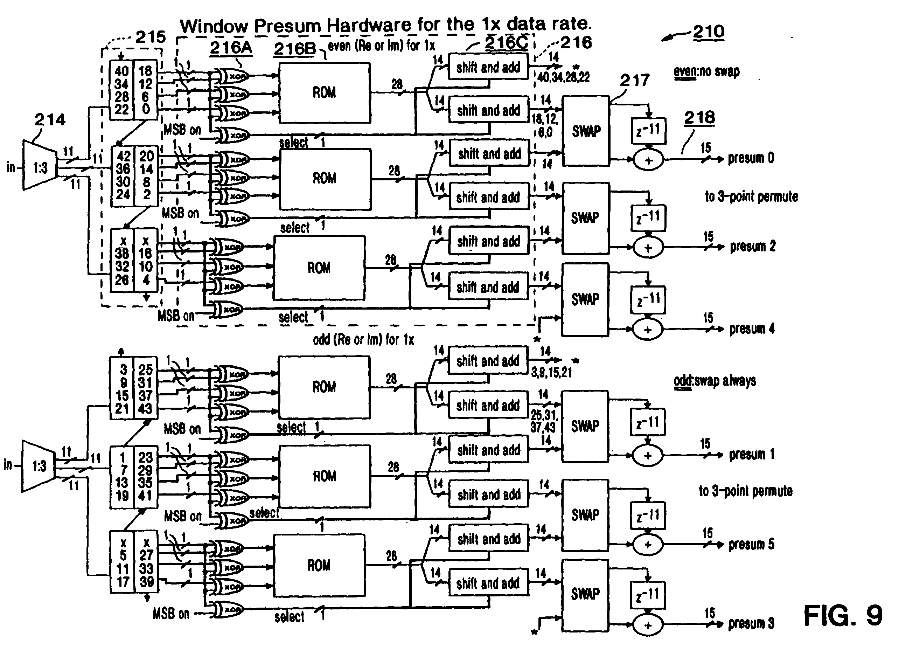

FIG. 9 illustrates a window presum hardware implementation of a window presum module 210 or 212 for real or imaginary data processing of the window presum block 22 of the multi-rate channelizer 20 operable to separate an input wideband signal into individual channels at 1x data rate according to the principles of the present invention. For purposes of simplicity, only the real data processing of the window presum module 210 may be described. As shown in FIG. 9, the window presum module 210 or 212 may be split into even and odd sections. The hardware to process the even points may be the same as that used to process the odd points. The odd input may be loaded in reverse so that the same filter taps may be used, since the filter h(k) may be symmetric. The window presum module 210 or 212 may contain a demultiplexer 214, shift registers 215, a distributed arithmetic (DA) unit 216, a swap unit 217, and an accumulator unit 218. The distributed arithmetic (DA) unit 216 may contain logic devices (XORs) 216A, memory devices (ROMs) 216B, and shift-and-adders 216C to perform distributed arithmetic (DA) calculations for high computational efficiency and low memory requirements. The distributed arithmetic (DA) architecture may also provide several advantages for satellite communication applications. First, the use of parallel processing for each data point may significantly reduce a system clock rate. Second, CMOS technology may be used for circuit implementation. Third, power consumption for circuit implementation may be significantly reduced. Lastly, the operating temperature of such circuit implementation may also be kept to a minimum.

The accumulator unit 218 may contain a plurality of delays and adders used for adding (summing) group sample outputs from the distributed arithmetic (DA) unit 216 in order to produce the sum of products (SOPs) P0, P2 and P4 for even presum processing of respective real and imaginary data word samples, and to produce the sum of prod-

ucts (SOPs) P1, P3 and P5 for odd presum processing of respective real and imaginary data word samples obtained in the manner described with reference to FIG. 8.

The input data (real or imaginary) may be demultiplexed by way of the demultiplexer 214 and provided as parallel outputs of 11-bit word samples. These data samples may be shifted from left to right through shift registers 215 in groups of 22 data samples. The even presum processing may receive 11 even points, and the odd presum processing may receive 11 odd points. Each presum calculation may be split between two memory devices (ROMs). The filter-tap multiplications and data point summations may be performed using the distributed arithmetic unit 216. Each group of 22 points may be multiplied by both the first half (rising edge) of the filter and the second half (falling edge) of the filter. The product from the falling edge may be delayed by 11 clock cycles (since each input data point is 11-bits wide) and then added to the result from the rising edge of the ROMs that may corresponding to the other points of the presum. The swap unit 217 may be used for the odd section only. The swap unit 217 may be in place for the even section so that the design for the even and odd presum processing may be the same. The swapping may be done since the odd inputs may be loaded in reverse in the manner as shown in FIG. 8.

The shift registers 215 may be represented as time index registers for storing time indexes of input data of 11-bit data words in groups of 22 samples per each bit cycle of 11 clock cycles. Each column of such shift registers 215 may represent one bit cycle for processing data points such as, for example, x(0), x(6), x(12), x(18), x(2), x(8), x(14), x(20), x(4), x(10), and x(16) for distributed arithmetic (DA) calculations. The shift registers 215 may contain a series of 11-bit parallel-to-serial converters which may output a least significant bit (LSB) first at initial time T0 and a most significant bit (MSB) last at time Ts. The memory devices (ROMs) 216B of the distributed arithmetic unit 216 may contain specific filter tap coefficient vectors H0, H1, H2, H3, H4 and H5 for multiplications and summations. During each bit cycle, each ROM output may be added to or subtracted from the accumulator unit 218 such that a sum of product (SOP) output therefrom may be right-shifted by one (1) and delayed by one (1) clock cycle. Using such window presum hardware for the 1x data rate, the sum of products (SOPs) P0, P2 and P4 for even presum processing of respective real and imaginary data word samples and the sum of products (SOPs) P1, P3 and P5 for odd presum processing of respective real and imaginary data word samples may be obtained as described with reference to FIG. 8.

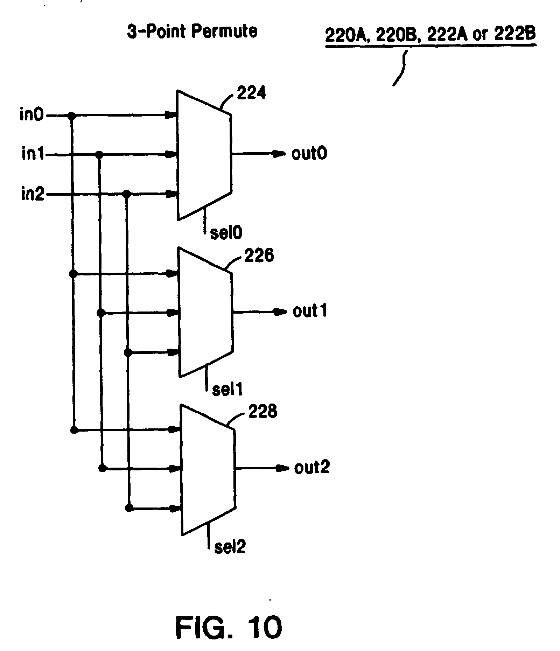

FIG. 10 illustrates a block level diagram of a 3-point permute module 220A, 220B, 222A or 222B of the cyclic shift block 24 for even and odd processing of respective real and imaginary data word samples of the channelizer 20 operable to separate an input wideband signal into individual channels at 1x data rate according to the principles of the present invention. Each 3-point permute module 220A, 220B, 222A or 222B may contain a series of multiplexers ("MUXs") 224, 226, 228 arranged in parallel to receive window presum outputs, i.e., sum of products (SOPs) for even or odd processing of respective real and imaginary data word samples. A circular shift of the SOP outputs from the window presum block 22 may be required before the discrete Fourier transform (DFT). The number of shifts may be determined by computing the value of the relationship N/GCD(N, M), and the value of each shift may be determined by computing the value of the relationship mM*modulo N or -mM*modulo N, where M may represent a decimation rate, N may represent a DFT size, and m may represent an output index variable which may range from zero upward. For the 1x data rate, M may correspond to twenty two (22) and N may correspond to six (6). Consequently, the number of shifts performed by the cyclic shift block 24 may be three (3). As shown in FIG. 10, the select lines may be set to control window presum outputs of the 3-point permute module in the order of shifts as follows:

|  | m=3i+0 | m=3i+1 | m=3i+2, where i≥0 |
|---|---|---|---|
| WP0 | P0 | P2 | P4 |
| WP1 | P4 | P0 | P2 |
| WP2 | P2 | P4 | P0 |
| WP3 | P3 | P5 | P1 |
| WP4 | P1 | P3 | P5 |
| WP5 | P5 | P1 | P3 |

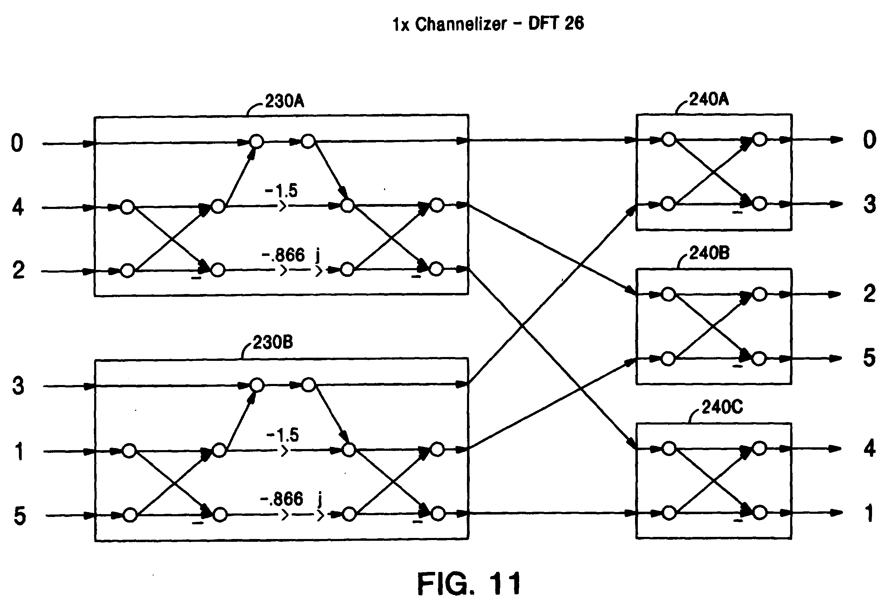

FIG. 11 illustrates an internal diagram of a discrete Fourier transform (DFT) block 26 for even and odd processing of respective real and imaginary data word samples of the multi-rate channelizer 20 operable to separate an input wideband signal into individual channels at 1x data rate according to the principles of the present invention. The DFT block 26 may contain a six (6) point DFT using, for example, Winograd algorithms for performing discrete Fourier transform computations. As shown in FIG. 11, there may be two (2) 3-point DFT modules 230A and 230B. Each 3-point DFT module 230A or 230B may process 3 permuted window presum results such as P0, P4, P2, P3, P1 and P5 for discrete Fourier transform (DFT) computations. 3-point DFT modules 230A and 230B may be followed by three (3) 2-point DFT modules 240A, 240B and 240C to produce four (4) valid individual channels, channels 0, 1, 2 and 3 as illustrated in the frequency domain shown in FIG. 3B.

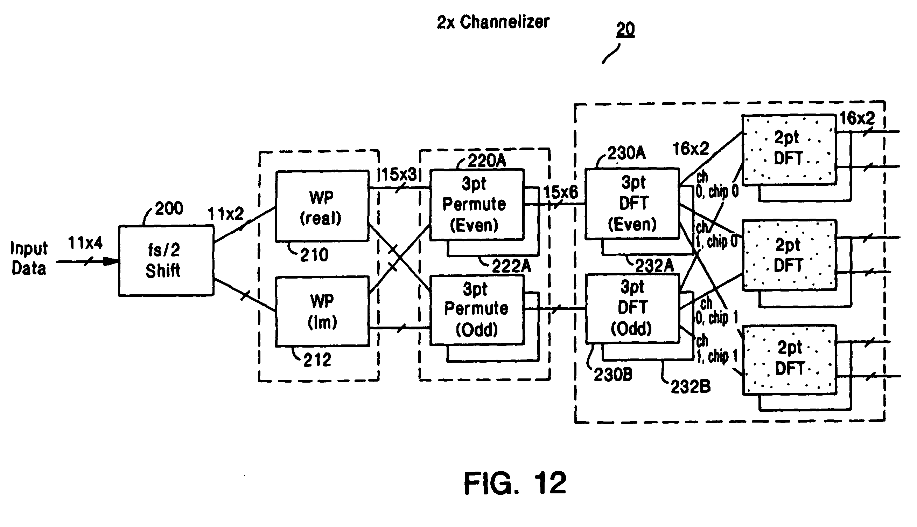

Turning now to FIG. 12, a block diagram of the hardware implementation of the configurable multi-rate channelizer 20 operable to separate an input spectrum into individual channels at 2x data rate according to the principles of the present invention is illustrated. As shown in FIG. 12, the 2x channelizer 20 may comprise the same window presum block 22, the cyclic shift block 24, and the discrete Fourier transform (DFT) block 26 as required for the 1x data rate. The window presum block 22 may contain the same window presum modules 210 and 212 implemented for parallel real and imaginary data operations to obtain a high throughput data rate. Likewise, the cyclic shift block 24 may contain the same 3-point permute modules 220A, 220B, 222A and 222B for parallel real and imaginary cyclic shifting operations.

However, the discrete Fourier transform (DFT) block 26 may contain only the 3-point DFT modules 230A, 230B, 232A and 232B for parallel real and imaginary DFT computations. The 2-point DFT modules 240A-240C and 242A-242C of the DFT block 26 as required by the 1x channelizer may now be bypassed as shaded to produce two (2) channels at 2x data rate. In addition, rather than the fs/4 shift block for the 1x data rate, a fs/2 shift block 200 may be installed as part of the configurable multi-rate channelizer 20 to translate the channels contained in the input spectrum to the center of the DFT bins. The fs/2 shift block 200 may be used for shifting input data of real and imaginary to place those channels of interest in the center of the DFT bins. Again, shadow blocks 222A-222B and 232A-232B may indicate identical hardware to process the imaginary data. For 2x mode of operation, the processing hardware blocks, such as the window presum block 22, the cyclic shift block 24 and the 3-point DFT modules 230A, 230A, 232A and 232B of the DFT block 26 as shown in FIG. 12 may be concomitantly used to process both real data and imaginary data produce two (2) sub-channels at 2x data rate. However, the 2-point DFT modules 240A-240C and 242A-242C of the DFT block 26 may be bypassed.

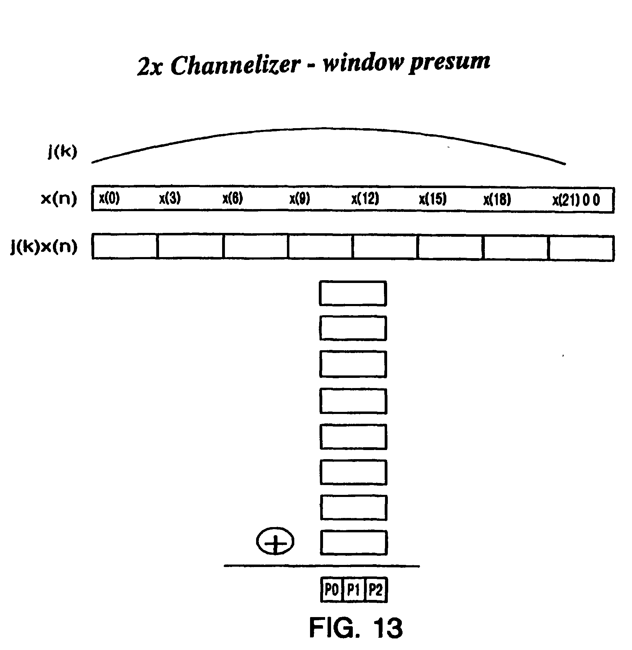

FIG. 13 illustrates an exemplary window presum function for respectively real and complex data words of the channelizer operable to separate an input wideband signal into individual channels at 2x data rate according to the principles of the present invention. The down-sampling rate M/2 may be set at eleven (11). The filter taps may be the even filter taps used for the 1x data rate to keep the filter shape the same. The filter tap length may be half that used for the 1x data rate. At each 11 clock cycle period, two sets of 11 samples may be windowed by both the rising edge and falling edge of the 22-tap filter. Two window presum outputs may be obtained at each 11 clock cycle period. One output may be obtained by adding the rising edge windowed results of the first set of 11 samples with the falling edge windowed results of the second set of 11 samples. The second output may be obtained by adding the falling edge windowed results of the first set of 11 samples with the corresponding rising edge windowed results that were held from the previous 11 clock cycles. The samples of twenty two (22) individual words of input data may be shifted from left to right through shift registers (not shown) in groups of 11 samples of each window presum modules 210 and 212 which may contain a number of subparts (DFT bins). The number of 11-bit word samples per subpart (the DFT size) may correspond to the number N of output channels.

For example, if the DFT bins may be set at three (3) for 2x data rate, then the number of 11-bit word samples per subpart may be set at three (3) as shown in FIG. 13 with reference to x(0), x(3), x(6), x(9), x(12), x(15), x(18) and x(21). Each subpart which may contain three (3) 11-bit word samples of real and imaginary data stored in the shift registers in groups of 11 of each window presum modules 210 and 212 may be multiplied with a window presum function coefficient to produce the sum of the multiplication products P0, P1 and P2 for subsequent cyclic shift and DFT operations. The multiplication products P0, P1 and P2 may be determined based on the assumption that J may be 2x filter tap value vector, J = [j0, j1, j2, j3 ... j21], m may be the window presum output index, and x(n) may be input data (real and imaginary). Such multiplication or sum of products (SOPs) P0, P1 and P2 for even and odd data processing may be obtained as follows:

$$P0(m) = [x(0+11m) \ x(3+11m) \ x(6+11m) \ x(9+11m)] \ [j0 \ j3 \ j6 \ j9]^{T} \ ^{T}$$
$$+[x(12+11m) \ x(15+11m) \ x(18+11m) \ x(21+11m)] \ [j12 \ j15 \ j18 \ j21]$$

$$P1(m) = [x(1+11m)x(4+11m)x(7+11m)x(10+11m)] \ [j1 \ j4 \ j7 \ j10]^{T} \ ^{T}$$
$$+[x(13+11m) \ x(16+11m) \ x(19+11m) \ 0] \ [j13 \ j16 \ j19 \ 0]$$

$$P2(m) = [x(2+11m) \ x(5+11m) \ x(8+11m) \ 0] \ [j2 \ j5 \ j8 \ 0]^{T} \ ^{T}$$
$$+[x(11+11m) \ x(14+11m) \ x(17+11m) \ x(20+11m)] \ [j11 \ j14 \ j17 \ j20]$$

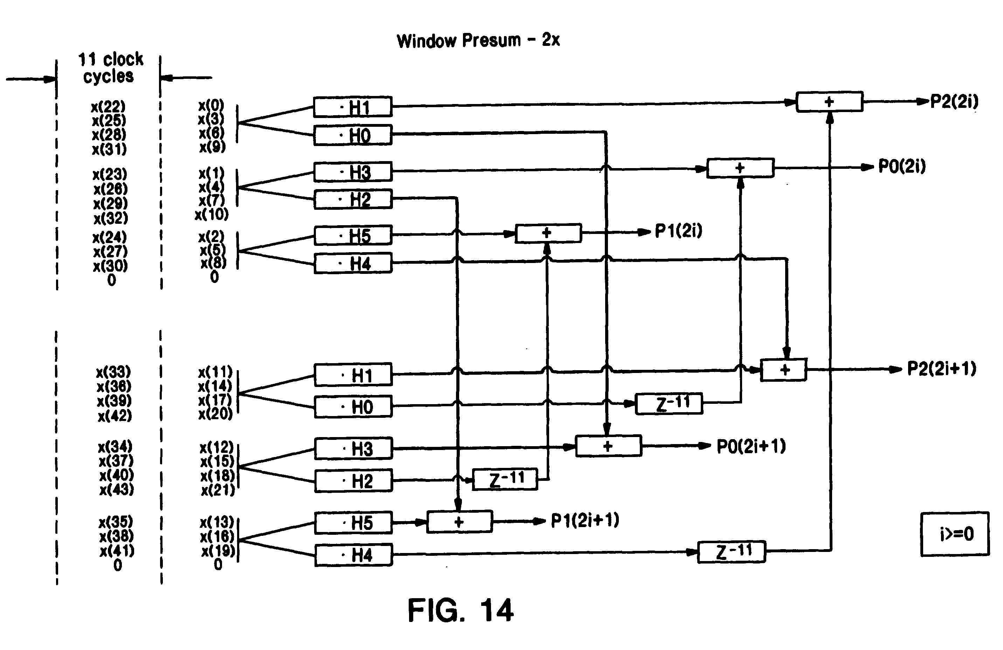

FIG. 14 illustrates a window presum operation for even and odd processing of respectively real and complex data word samples of the multi-rate channelizer 20 operable to separate an input wideband signal into individual channels at 2x data rate according to the principles of the present invention. The individual components of the 2x filter tap coefficient vector J may contain the even tap values of the 1x filter tap coefficient vector H. Each component of J may be defined as $j(k)=h(2k)$.

The input data may be shifted through the shift registers in groups of 22 data samples. The "even" presum may receive 11 samples, and the "odd" presum may receive 11 samples. The presums are referred to as "even" and "odd" because the hardware corresponds to the even and odd presums respectively used for the 1x data rate. The sum of products (SOPs) P0, P1 and P2 for even and odd presum processing of respective real and imaginary data word samples may therefore be obtained by taking the inner product of the input data x(n) in groups of 22 data samples and the specific filter tap coefficient vectors H0, H1, H2, H3, H4 and H5 as follows:

$$P0(m) = [x(0+11m)\ x(3+11m)\ x(6+11m)\ x(9+11m)]*H0 +[x(12+11m)\ x(15+11m)\ x(18+11m)\ x(21+11m)]*H3$$

$$P1(m) = [x(1+11m)\ x(4+11m)\ x(7+11m)\ x(10+11m)]*H2 +[x(13+11m)\ x(16+11m)\ x(19+11m)0]*H5$$

$$P2(m)= [x(2+11m)\ x(5+11m)\ x(8+11m)\ 0]*H4 +[x(11+11m)\ x(14+11m)\ x(17+11m)\ x(20+11m)]*H1$$

Basically, P0(m) may be obtained by multiplying a first set of data points x(0), x(3), x(6) and x(9) with the initial filter tap coefficient vector H0, multiplying a next set of data points x(12), x(15), x(18) and x(21) with the fourth filter tap coefficient vector H3, and adding the multiplication products after delaying the former multiplication product by an eleven clock cycle delay $Z^{-11}$. Similarly, P1(m) may be obtained by multiplying another set of data points x(1), x(4), x(7) and x(10) with the third filter tap coefficient vector H2, multiplying a next set of data points x(13), x(16) and x(19) with the sixth filter tap coefficient vector H5, and adding the multiplication products after delaying the former multiplication product by an eleven clock cycle delay $Z^{-11}$. Likewise, P2(m) may be obtained by multiplying data points x(2), x(5) and x(8) with the fifth filter tap coefficient vector H4, multiplying data points x(11), x(14), x(17) and x(20) with the second filter tap coefficient vector H1, and adding the multiplication products after delaying the former multiplication product by an eleven clock cycle delay $Z^{-11}$.

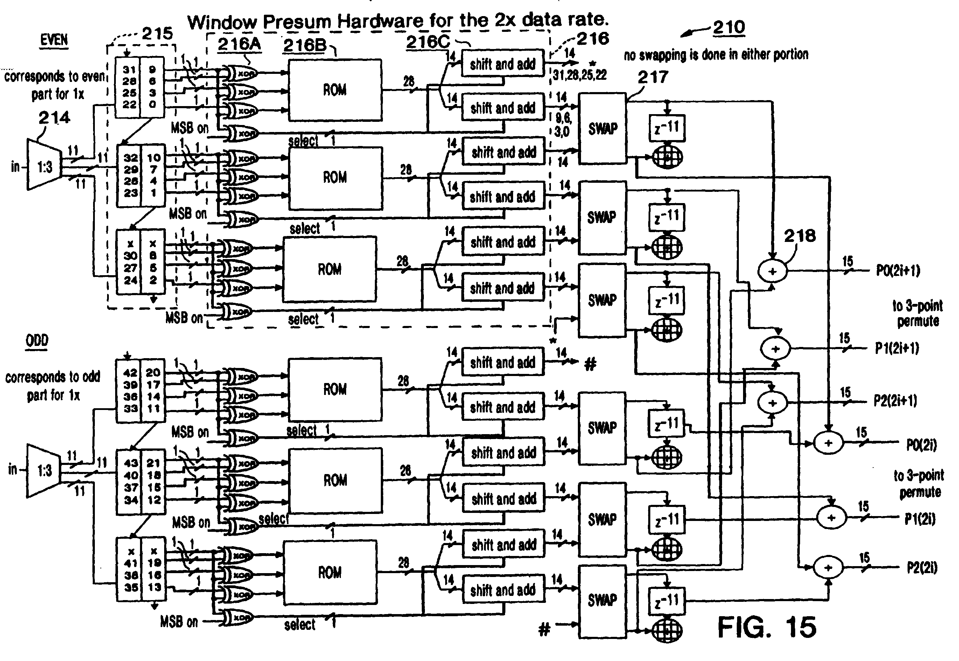

FIG. 15 illustrates a window presum hardware implementation of a window presum module 210 or 212 for real or imaginary data processing of the window presum block 22 of the channelizer operable to separate an input signal into individual channels at 2x data rate according to the principles of the present invention. For purposes of simplicity, only the real data processing of the window presum module 210 may be described. As shown in FIG. 15, the window presum module 210 or 212 may be split into "even" and "odd" sections. These sections correspond to the even and odd sections respectively used for the 1x data rate. The "even" section may process both even and odd points and the "odd" section may process both even and odd points. The hardware contained in the "even" section may be the same as that contained in the "odd" section with the exception of the final accumulation stage. The window presum module 210 or 212 may contain the same multiplexer 214, the shift registers 215, the distributed arithmetic (DA) unit 216, the swap unit 217, and the accumulator unit 218 as that shown in FIG. 9 for the 1x data rate window presum modules. The distributed arithmetic unit 216 may contain logic devices (XORs) 216A, memory devices (ROMs) 216B, and shift-and-adders 216C to perform distributed arithmetic calculations for high computational efficiency and low memory requirements. However, certain delays of the accumulator unit 218 may be bypassed (shaded as shown in FIG. 15) for outputting sum of products (SOPs) P0, P1 and P2 for even and odd presum processing of respective real and imaginary data word samples obtained in the manner described with reference to FIG. 14.

The input data (real or imaginary) may be demultiplexed by way of the demultiplexer 214 and provided as parallel output 11-bit word samples. These data samples may be shifted into shift registers 215 in groups of 22 data samples. The "even" presum processing may receive 11 points, and the "odd" presum processing may receive 11 points. Each presum calculation may be split between two memory devices (ROMs). The filter-tap multiplications and data point summations may be performed using the distributed arithmetic (DA) unit 216. During each 11 clock cycle period, two sets of 11 data samples (points) may be multiplied by both the first half (rising edge) of the filter and the second half (falling edge) of the filter. The product from the falling edge may be delayed by 11 clock cycles and then added to the result from the rising edge of the ROMs that may corresponding to the other points of the presum.

The shift registers 215 may be represented as time index registers for storing time indexes of input data of 11-bit data words in groups of 22 samples per each bit cycle of 11 clock cycles. Each column of such shift registers 215 may represent one bit cycle for processing data points such as, for example, x(0), x(3), x(6), x(9), x(1), x(4), x(7), x(10), x(2), x(5) and x(8) for distributed arithmetic calculations. The shift registers 215 may contain a series of 11-bit parallel-to-serial converters which may output a least significant bit (LSB) first at initial time T0 and a most significant bit (MSB) last at time Ts. The memory devices (ROMs) 216B of the distributed arithmetic unit 216 may contain specific filter tap coefficient vectors H0, H1, H2, H3, H4 and H5 for multiplications and summations. During each bit cycle, each ROM output may be added to or subtracted from the shift and add unit 216C such that a sum of product (SOP) output therefrom may be right-shifted by one (1) and delayed by one (1) clock cycle. Using such window presum hardware for the 2x data rate, the sum of products (SOPs) P0(2i), P1(2i) and P2(2i) for even outputs of respective real and imaginary data word samples and the sum of products (SOPs) P0 (2i+1), P1 (2i+1) and P2 (2i+1) for odd outputs of respective real and imaginary data word samples may be obtained in the manner described with reference to FIG. 14.

Each 3-point permute module 220A, 220B, 222A or 222B of the cyclic shift block 24 for even and odd processing of respective real and imaginary data word samples of the multi-rate channelizer 20 operable to separate an input wideband signal into individual channels at 2x data rate may be described with reference to FIG. 10. A series of multiplexers ("MUXs") 224, 226, 228 may be arranged in parallel to receive window presum outputs, i.e., sum of products (SOPs) for even or odd processing of respective real and imaginary data word samples. A circular shift of the SOP outputs from the window presum block 22 may be required before the discrete Fourier transform (DFT). The number of shifts may be determined by computing the value of the relationship N/GCD(N, M), and the value of each shift may be determined by computing the value of the relationship mM* modulo N or -mM*modulo N, where M may represent a decimation rate, N may represent a DFT size, and m may represent an output index variable which may range from zero upward. For the 2x data rate, M may correspond to eleven (11) and N may correspond to three (3). Consequently, the number of shifts performed by the cyclic shift block 24 may be three (3). As shown in FIG. 10, the select lines may be set to control window presum outputs of the 3-point permute module in the order of shifts as follows:

| Even | | |
|---|---|---|
| m=3i | m=3i+1 | m=3i+2 |
| P0 | P2 | P1 |
| P1 | P0 | P2 |
| P2 | P1 | P0 |
| Odd | | |
| m=3i | m=3i+1 | m+3i+2 |
| P1 | P0 | P2 |
| P2 | P1 | P0 |
| P0 | P2 | P1 |

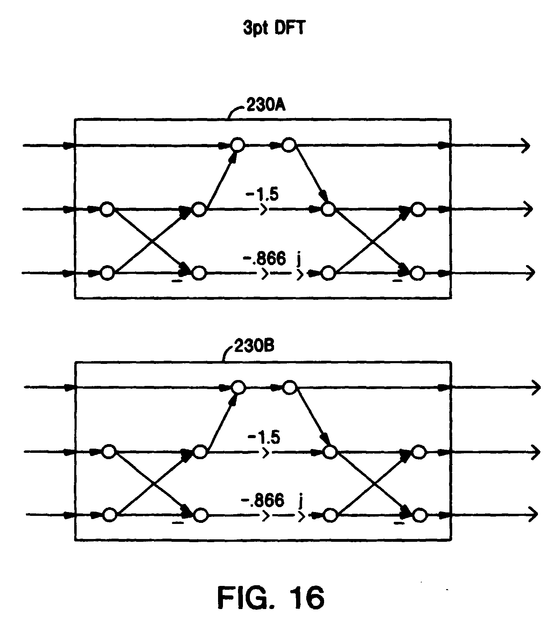

FIG. 16 illustrates an internal diagram of a discrete Fourier transform (DFT) block 26 for even and odd processing of respective real and complex data word samples of the multi-rate channelizer 20 operable to separate an input wideband signal into individual channels at the 2x data rate according to the principles of the present invention. The DFT block 26 may contain the same two (2) 3-point DFT modules 230A/232A and 230B/232B as required for the 1x data rate. For the 2x data rate, the first 3-point DFT module 230A/232A may process the even sets of the permuted results, and the second 3-point DFT module 230B/232B may process the odd sets of the permuted results for discrete Fourier transform (DFT) computations. However, the three 2-point DFT modules 240A/242A, 240B/242B and 240C/242C as required for the 1x data rate may be bypassed. The DFT outputs may be two (2) valid individual channels, channels 1 and 2 as illustrated in the frequency domain shown in FIG. 4B. DFT bin 0 may be discarded.

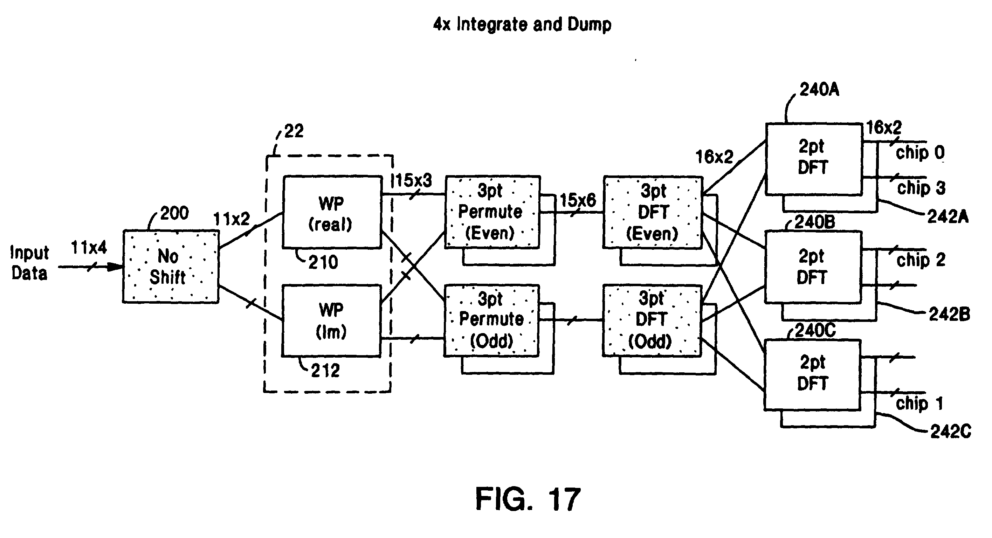

FIG. 17 illustrates a block diagram of the hardware implementation of the configurable multi-rate channelizer 20 operable to separate an input wideband signal into individual channel(s) at the 4x data rate according to the principles of the present invention. As shown in FIG. 17, the 4x channelizer 20 may comprise the same window presum block 22, the cyclic shift block 24, and the discrete Fourier transform (DFT) block 26 as required for the 1x data rate and the 2x data rate. However, the window presum block 22 may be used as the first stage of accumulation and the 2-point DFT modules 240A, 240B and 240C of the DFT block 26 may be used as the final stage of accumulation for integrate and dump operations. Neither permutation nor 3-point DFT computation may be needed because no channelization may be required for the 4x data rate. Consequently, the 3-point permute modules 220A, 220B, 222A, 222B of the cyclic shift block 24 and the 3-point DFT modules 230A, 230B, 232A, 232B of the DFT block 26 as required by the 1x channelizer and the 2x channelizer may be bypassed (shaded as shown in FIG. 17) to produce a single channel at the 4x data rate. In addition, no frequency shift may be required to translate the channels contained in the input spectrum to the center of the DFT bins.

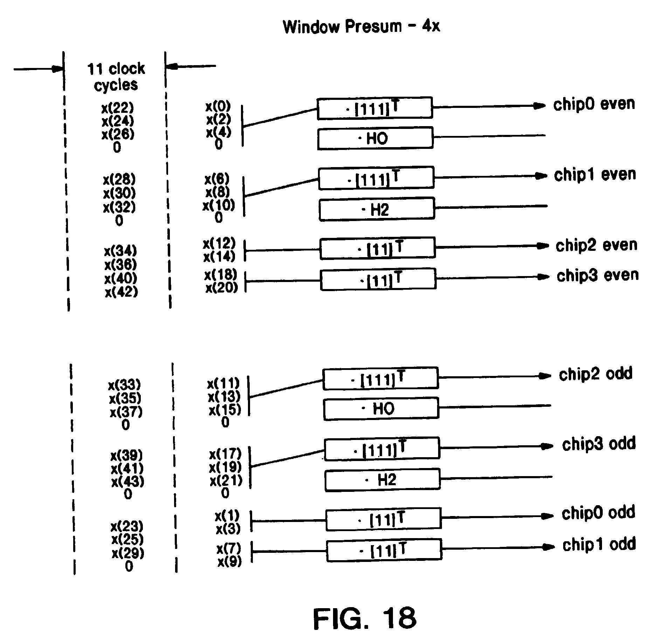

FIG. 18 illustrates a first accumulation operation for respectively real and imaginary data words of the window presum block 22 of the multi-rate channelizer 20 operable to separate an input wideband signal into individual channels at the 4x data rate according to the principles of the present invention. The input data may be shifted into shift registers (not shown) in groups of 22 data samples and may be accumulated by 5:1 accumulation ratio as follows:

$$C0(m) = [x(0+22m) \ x(2+22m) \ x(4+22m)] + [x(1+22m) \ x(3+22m)]$$

$$C1(m) = [x(6+22m) \ x(8+22m) \ x(10+22m)] + [x(7+22m) \ x(9+22m)]$$

$$C2(m) = [x(11+22m) \ x(13+22m) \ x(15+22m)] + [x(12+22m) \ x(14+22m)]$$

$$C3(m) = [x(17+22m) \ x(19+22m) \ x(21+22m)] + [x(18+22m) \ x(20+22m)]$$

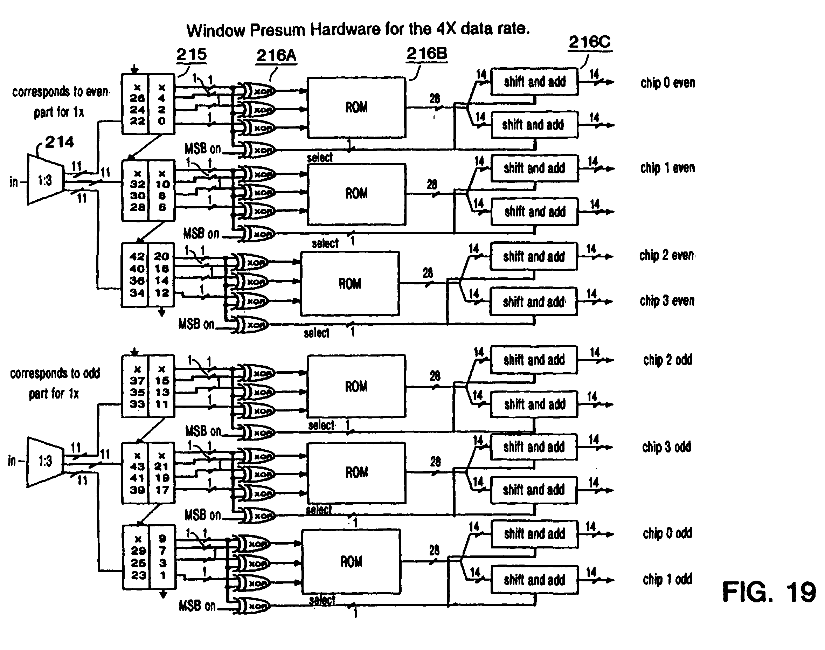

FIG. 19 illustrates a window presum hardware implementation of a window presum module 210 or 212 for real or imaginary data processing of the window presum block 22 of the multi-rate channelizer 20 operable to separate an input signal into individual channels at the 4x data rate according to the principles of the present invention. Again, only the real data processing of the window presum module 210 may be described for purposes of simplicity. The same hardware may be used for imaginary data processing. As shown in FIG. 19, the window presum module 210 or 212 may be split into even and odd sections. The hardware to process the even points may be the same as that used to process the odd points. The window presum module 210 or 212 may contain the same multiplexer 214, the shift registers 215, and the distributed arithmetic (DA) unit 216 which may be modified to perform integration and dump operations. The swap unit and the accumulator unit, as required for the 1x data rate and the 2x data rate, may be bypassed altogether. The distributed arithmetic (DA) unit 216 may contain logic devices (XORs) 216A, memory devices (ROMs) 216B, and shift-and-adders 216C to perform distributed arithmetic calculations for high computational efficiency and low memory requirements.

The input data (real or imaginary) may be multiplexed by way of the multiplexer 214 and provided as parallel outputs of 11-bit word samples. These data samples may be shifted into shift registers 215 in group of 22 data samples. The even integrate and dump processing may receive 11 even points, and the odd integrate and dump processing may receive 11 odd points. Each integrate and dump operation may be split between two memory devices (ROMs) 216B for even and odd data processing for the 4x data rate. Selected shift and adders as shaded may be bypassed. Similarly, the 3-point permute modules 220A 220B, 222A, 222B of the cyclic shift block 24, and the 3-point DFT modules 230A, 230B, 232A, 232B of the DFT block 26 may be bypassed because no permutation may be needed for the 4x data rate. The 2-point DFT modules 240A-240C, 242A-242C may be used as adders for the final stage of accumulation to produce a single channel output at 4x data rate. The DFT output may be a single channel as illustrated in the frequency domain shown in FIG. 5B.

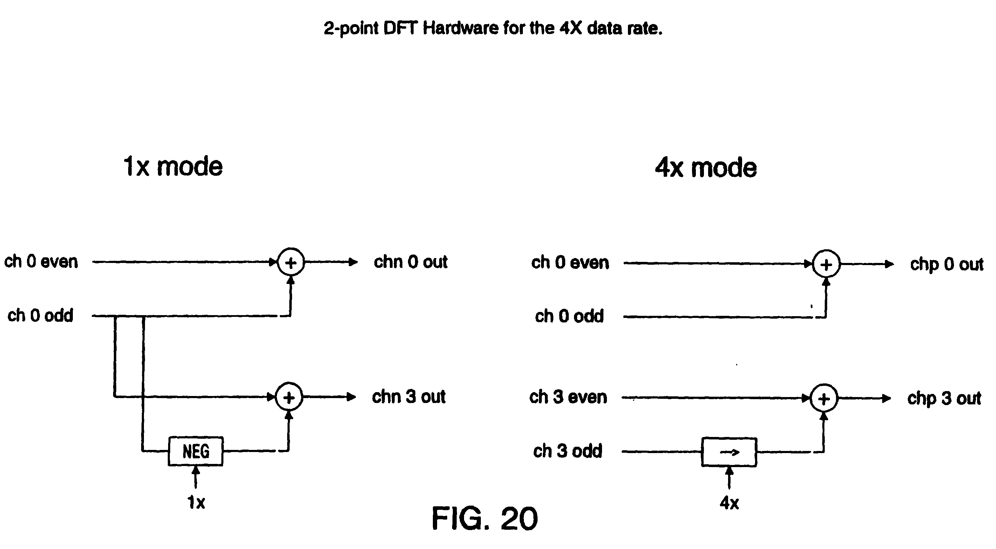

FIG. 20 provides a comparison of an internal diagram of each 2-point DFT module 240A-240C, 242A-242C of the DFT block 26 for even and odd processing of respective real and complex data word samples of the multi-rate channelizer 20 operable to separate an input signal into individual channels at the 1x data rate and the 4x data rate according to the principles of the present invention. The 2-point DFT module 240A-240C, 242A-242C of the DFT block 26 used for the 1x data rate may be modified as adders for the 4x mode of operation. In other words, these 2-point DFT modules 240A-240C, 242A-242C of the DFT block 26 may be used as adder by simply eliminating the negative and passing an integrated product, chip 0 odd to be added with an integrated product, chip 3 even to output chip 3. It should be noted here that the 2-point DFT module 240A-240C, 242A-242C of the DFT block 26 may not be needed for the 2x data rate. Consequently, these 2-point DFT modules may be bypassed for the 2x mode of operation.

As described in the foregoing, the configurable multi-rate channelizer as constructed according to the principles of the present invention may advantageously be provided to separate an input signal of different input channel groups into individual channel(s) at different data rates. This channelizer design may advantageously be configurable with minimal hardware for efficiently servicing multiple input data rates while realizing design hardware savings. In addition, the multi-rate channelizer may be implemented with an efficient hardware architecture using parallel window presum and discrete Fourier transform operations to separate an input wideband signal of different channel group bandwidths into individual channel(s) at different data rates. Parallel window presum and DFT architecture of the multi-rate channelizer according to the present invention may offer several advantages for satellite communications applications. For example, the parallel processing operations of window presum and DFT circuits may minimize the speed of an operating clock which may advantageously enable efficient deployment of ASIC (application specific integrated circuit) hardware. The power consumption may be reduced because inexpensive and compact integrated circuit technologies such as CMOS (complementary MOSFET) may be used for window presum and DFT operations. Lastly, the parallel window presum and DFT circuits may be conveniently packaged in modular forms.

While there have been illustrated and described what are considered to be preferred embodiments of the present invention, it will be understood by those skilled in the art that various changes and modifications may be made, and equivalents may be substituted for elements thereof without departing from the true scope of the present invention. For example, while the improved channelizer may be described for use in satellite systems, the present invention is not limited thereto. Such improved channelizer may be well suited for other types of communications systems such as all current and future cellular and personal communication systems (PCS) which receive electromagnetic radiation within a frequency band containing multiple channels. In addition, other multiples of output data rates such as 8x, 16x, 32x etc.. may be suitably produced as long as the input bandwidth may be sufficiently large to support higher multiples of output data rates. Further, many modifications may be made to adapt a particular situation to the teachings of the present invention without departing from the central scope of the present invention. For example, there may be other window presum hardware implementations for summing individual data samples with preassigned window presum coefficients, such as multipliers and adders. Therefore, it is intended that the present invention not be limited to the particular embodiment disclosed as the best mode contemplated for carrying out the present invention, but that the present invention includes all embodiments falling within the scope of the appended claims.

**Claims**

1.  A channelizer which operates in different modes of channelization to separate an input signal of different channel groups into individual channel(s) at a different data rate, said channelizer comprising:

    a plurality of window presum modules, arranged in parallel to receive successive sets of even and odd data samples of said input signal, which perform window presum operations in accordance with function coefficients to produce parallel presum outputs;
    a plurality of cyclic shift modules, arranged in parallel to receive respective ones of said parallel presum outputs, which perform phase shift operations in accordance with a number of shifts to produce phase adjusted outputs; and
    a plurality of discrete Fourier transform (DFT) modules, arranged in parallel to receive respective ones of said phase adjusted outputs, which perform discrete Fourier transform (DFT) computations to produce said individual channels at a different data rate.

2.  A channelizer as claimed in claim 1, wherein said number of shifts of said plurality of cyclic shift modules is determined by N/GCD(N,M) and said value of each shift is determined by mM*modulo N, where M represents a decimation rate, N represents a discrete Fourier transform (DFT) size and m represents an index variable.

3.  A channelizer as claimed in claim 1, wherein said plurality of window presum modules, said plurality of cyclic shift modules, and said plurality of discrete Fourier transform (DFT) modules are used together to separate said successive sets of even and odd data samples of said input signal into individual channels with a first spacing of a bandwidth frequency of said input signal at a first data rate, when a selected mode of said channelization corresponds to a first mode set for channelizing said input signal into said individual channels at said first data rate.

4.  A channelizer as claimed in claim 3, wherein said plurality of window presum modules, said plurality of cyclic shift modules, and selected ones of said plurality of discrete Fourier transform (DFT) modules are used together while remaining ones of said plurality of discrete Fourier transform (DFT) modules are bypassed to separate said successive sets of even and odd data samples of said input signal into individual channels with a second spacing of greater than said first spacing of a bandwidth frequency of said input signal at a second data rate, when said selected mode of said channelization corresponds to a second data mode set for channelizing said input signal into said individual channels at said second data rate.

5.  A channelizer as claimed in claim 4, wherein said plurality of window presum modules and selected ones of said plurality of discrete Fourier transform (DFT) modules are used for integrate and dump operations while said plurality of cyclic shift modules and remaining ones of said plurality of discrete Fourier transform (DFT) modules are bypassed to separate said successive sets of even and odd data samples of said input signal into a single channel with a third spacing greater than said second spacing of a bandwidth frequency of said input signal at a third data rate, when said selected mode of said channelization corresponds to a third data mode set for channelizing said input signal into said single channels at said third data rate.

6.  A channelizer as claimed in claim 1, wherein said different modes of channelization comprise a 1x data rate mode for separating said successive sets of even and odd data samples of said input signal into a first plurality of individual channels with a spacing of a bandwidth frequency of said input signal at the 1x date rate, a 2x date rate mode for separating said successive sets of even and odd data samples of said input signal into a second plurality of individual channels with a spacing of twice the bandwidth frequency of said input signal at the 2x data rate, and a 4x data rate mode for separating said successive sets of even and odd data samples of said input signal into a single channel with a spacing four times the bandwidth frequency of said input signal at the 4x data rate.

7. A channelizer as claimed in claim 6, wherein said plurality of window presum modules, said plurality of cyclic shift modules and said discrete Fourier transform (DFT) modules operate together to channelize said successive sets of even and odd data samples of said input signal into said first plurality of individual channels as parallel outputs at the 1x data rate, when a selected mode of channelization corresponds to said 1x data rate mode.

8. A channelizer as claimed in claim 1, wherein said plurality of window presum modules comprise:

first window presum circuits, arranged to receive respective ones of said successive sets of said real data samples of even and odd data points, which perform window presum operations in accordance with a first set of function coefficients to produce presum outputs of even and odd data points of said real data; and
second window presum circuits, arranged to receive respective ones of said successive sets of said imaginary data samples of even and odd data points, which perform said window presum operations in accordance with a second set of function coefficients substantially identical to the first set to produce presum outputs of even and odd data points of said imaginary data.

9. A channelizer as claimed in claim 8, wherein said plurality of cyclic shift modules comprise:

first 3-point permutes, arranged in parallel to receive respective ones of said presum outputs of even and odd data points of said real data, which perform phase shift operations in accordance with said number of shifts to produce phase adjusted outputs of even and odd data points of said real data; and
second 3-point permutes, arranged in parallel to receive respective ones of said presum outputs of even and odd data points of said imaginary data, which perform said phase shift operations in accordance with said number of shifts to produce phase adjusted outputs of even and odd data points of said imaginary data.

10. A channelizer as claimed in claim 9, wherein said plurality of discrete Fourier transform (DFT) modules comprises:

first 3-point discrete Fourier transform (DFT) units, arranged to receive respective ones of said phase adjusted outputs of even data points of said complex data, which perform 3-point transformations to produce first transform outputs of even data points of said complex data;
second 3-point discrete Fourier transform (DFT) units, arranged to receive respective ones of said phase adjusted outputs of odd data points of said complex data, which perform said 3-point transformations to produce first transform outputs of odd data points of said complex data;
first 2-point discrete Fourier transform (DFT) units, arranged to receive respective ones of said first transform outputs of even and odd data points of said complex data, which perform 2-point transformations to produce said individual channels of interest.

11. A channelizer as claimed in claim 10, wherein said plurality of window presum modules, said plurality of cyclic shift modules, and the first and second 3-point discrete Fourier transform (DFT) units of said discrete Fourier transform (DFT) modules are used together, while the first 2-point discrete Fourier transform (DFT) units of said plurality of discrete Fourier transform (DFT) modules are bypassed to separate said successive sets of even and odd data samples of said input signal into said second plurality of individual channels as parallel outputs at the 2x data rate, when a selected mode of channelization corresponds to said 2x data rate mode.

12. A channelizer as claimed in claim 10, wherein said plurality of window presum modules, and the first 2-point discrete Fourier transform (DFT) units of said discrete Fourier transform (DFT) modules are used together, while said plurality of cyclic shift modules and the first and second 3-point discrete Fourier transform (DFT) units of said discrete Fourier transform (DFT) modules are bypassed to separate said successive sets of even and odd data samples of said input signal into a single channel output at the 4x data rate, when a selected mode of channelization corresponds to said 4x data rate mode.

13. A channelizer as claimed in claim 10, wherein said plurality of window presum modules function as a first accumulator, and the first 2-point discrete Fourier transform (DFT) units of said discrete Fourier transform (DFT) modules function as a final accumulator, while said plurality of cyclic shift modules and the first and second 3-point discrete Fourier transform (DFT) units of said discrete Fourier transform (DFT) modules are bypassed to separate said successive sets of even and odd data samples of said input signal into a single channel output at the 4x data rate, when a selected mode of channelization corresponds to said 4x data rate mode.

14. A channelizer as claimed in claim 8, wherein said first window presum circuits comprise:

demultiplexers arranged to receive respective ones of said successive sets of said real data samples of even and odd data points to produce parallel outputs of data samples of even and odd data points; shift registers arranged to shift from left to right said data samples of even and odd data points for distributed arithmetic calculations; and distributed arithmetic modules arranged to receive said data samples of even and odd data points provided from said shift registers for performing filter-tap multiplications and data point summations to produce presum outputs of even and odd data points of said real and imaginary data.

15. A channelizer as claimed in claim 14, wherein said distributed arithmetic modules each comprises:

logic devices arranged in parallel to receive said data samples of even and odd data points provided from said shift registers; memory devices arranged to temporarily store logic outputs from said logic devices for said filter-tap multiplications in accordance with said function coefficients; and shift-and-adders arranged to perform said data point summations to produce presum outputs of even and odd data points of said real and imaginary data.

16. A receiving station for wireless communication network containing multiple communication channels, comprising:

a radio-frequency processor which intercepts electromagnetic radiation within a frequency band and converts the intercepted electromagnetic radiation into a composite signal containing multiple communication channels; an analog-to-digital converter which converts said composite signal containing multiple communication channels into a digitized signal containing successive sets of data samples representative of said composite signal; a demultiplexer which divides said digitized signal into parallel data streams of successive sets of data samples; at least one channelizer which operates in different modes of channelization for separating said parallel data streams of successive sets of data samples of said digitized signal to produce individual channels at a different data rate in dependence upon a selected mode of channelization; and at least one signal processor which processes respective individual channels produced from said channelizer and supplies processed ones of said individual channels at respective output parts.

17. A process for channelizing an input signal of an input spectrum into individual channels for output at a different data rate using a single channelizer, comprising:

determining whether one of different modes of channelization of said single channelizer has been selected for different data rate; when a selected mode of channelization corresponds to a first data rate, configuring said single channelizer to separate successive sets of even and odd data samples of said input signal into a first plurality of individual channel(s) with a spacing of a bandwidth frequency of said input signal at the first data rate using parallel window presum and discrete Fourier transform computations; when a selected mode of channelization corresponds to a second data rate twice faster than said first data rate, configuring said single channelizer to separate successive sets of even and odd data samples of said input signal into a second plurality of individual channel(s) with a spacing of twice the bandwidth frequency of said input signal at the second data rate using said parallel window presum and discrete Fourier transform computations; and when said selected mode of channelization corresponds to a third data rate, configuring said single channelizer to separate successive sets of even and odd data samples of said input signal into a single channel with a spacing of four times the bandwidth frequency of said input signal at the third data rate using integrate and dump operations.

18. A process as claimed in claim 17, further channelizing, via said single channelizer, said successive sets of even and odd data samples of said input signal into said first plurality of individual channels as parallel outputs at the first data rate using a complex multiplier to obtain the channels of interest, a lowpass filter to eliminate interference, and a down-sampling converter to sample the channels of interest at a first down-sampling rate.

19. A process as claimed in claim 17, further channelizing, via said single channelizer, said successive sets of even and odd data samples of said input signal into said second plurality of individual channels as parallel outputs at the second data rate using a complex multiplier to obtain the channels of interest, a lowpass filter to eliminate interference, and a down-sampling converter to sample the channels of interest at a second down-sampling rate.

20. A process as claimed in claim 17, wherein said single channelizer separates said input signal into individual channels for output at said different data rate by:

receiving in parallel different ones of said successive sets of even and odd, real and imaginary data samples of said input signal for window presum operations in accordance with function coefficients to produce parallel presum outputs;
receiving in parallel respective ones of said parallel presum outputs for phase shift operations in accordance with a number of shifts to produce phase adjusted outputs, said value of shifts being determined by mM*modulo N, where M represents a decimation rate, N represents a discrete Fourier transform (DFT) size and m represents an index variable; and
receiving in parallel respective ones of said phase adjusted outputs for discrete Fourier transform (DFT) calculations to produce transformed baseband outputs representative of said individual channels of interest.

FIG. 1

INPUT → BPF (12) → A/D (14) → DEMUX (16) → [18]

WINDOW PRESUM (22) → CYCLIC SHIFT (24) → DFT (26) → FURTHER PROCESSING

(10)

(20)

FIG. 2

## NBC (Narrow Band Channelizer) Input Spectrum, 1X Mode

*1X Mode Functional Flow*
*in the Frequency Domain*

FIG. 3A

## Spectrum After $f_s/4$ Shift, 1X Mode

FIG. 3B

## Spectrum After Filtering, 1X Mode

FIG. 3C

## Decimated NBC Output Spectrum, 1X Mode

FIG. 3D

EP 1 032 154 A2

## 2X Mode Functional Flow in the Frequency Domain

### NBC Input Spectrum, 2X Mode

$f_s$=120MHz

A          B

-60  -40  -20   0   20   40   60    f(MHz)

**FIG. 4A**

### Spectrum After $f_s$/2 Shift, 2X Mode

$f_s$=120MHz

B                    A

-60  -40  -20   0   20   40   60    f(MHz)
      2        0        1           DFT Bins

**FIG. 4B**

### Spectrum After Filtering, 2X Mode

$f_s$=120MHz

-60 -50 -40 -30 -20 -10  0  10  20  30  40  50  60   f(MHz)

**FIG. 4C**

### Decimated NBC Output Spectrum, 2X Mode

$f_s$=120/11≅10.91MHz

-240/11        -120/11         0         120/11        240/11    f(MHz)
-2$f_s$          -$f_s$                        $f_s$            2$f_s$

**FIG. 4D**

## NBC Input Spectrum, 4X Mode

$f_S$=120MHz

-60  -40  -20  0  20  40  60    f(MHz)

**FIG. 5A**

## Decimated NBC Output Spectrum, 4X Mode

$f_S$=120/5.5=240/11=21.82MHz

-480/11      -240/11      0      240/11      480/11    f(MHz)
-2$f_S$       -$f_S$              $f_S$       2$f_S$

**FIG. 5B**

EP 1 032 154 A2

Input Data

11x4

200 — fs/4 Shift

11x2

22 — WP (real) 210

WP (Im) 212

115x3

24 — 3pt Permute (Even) 220A / 222A

3pt Permute (Odd) 222B / 220B

15x6

26 — 3pt DFT (Even) 230A / 232A

3pt DFT (Odd) 232B / 230B

16x2

240A — 2pt DFT — 16x2 — ch 0 / ch 3 — 242A

240B — 2pt DFT — ch 2 — 242B

240C — 2pt DFT — ch 1 — 242C

20

1x Channelizer

FIG. 6

## 1x Channelizer - window presum

_22_

h(k)

x(n) | x(0) | x(6) | x(12) | x(18) | x(24) | x(30) | x(36) | x(43) 0 0 0 0

h(k)x(n)

P0 P1 P2 P3 P4 P5

## FIG. 7

EP 1 032 154 A2

FIG. 8

Window Presum Hardware for the 1x data rate.

FIG. 9

3-Point Permute             220A, 220B, 222A or 222B

FIG. 10

**FIG. 12**

*2x Channelizer - window presum*

J(k)

x(n) | x(0) | x(3) | x(6) | x(9) | x(12) | x(15) | x(18) | x(21) 0 0

J(k)x(n)

P0 P1 P2

FIG. 13

FIG. 14

FIG. 15

3pt DFT

230A

-1.5

-.866 j

230B

-1.5

-.866 j

# FIG. 16

## 4x Integrate and Dump

Input Data → 11x4 → [200 No Shift] → 11x2

[22]
- [210 WP (real)]
- [212 WP (Im)]

15x3 → [3pt Permute (Even)]
[3pt Permute (Odd)]

15x6 → [3pt DFT (Even)]
[3pt DFT (Odd)]

16x2 → [240A 2pt DFT] → 16x2 → chip 0, chip 3 — 242A
[240B 2pt DFT] → chip 2 — 242B
[240C 2pt DFT] → chip 1 — 242C

## FIG. 17

EP 1 032 154 A2

**Window Presum - 4x**

FIG. 18

Window Presum Hardware for the 4X data rate.

FIG. 19

2-point DFT Hardware for the 4X data rate.

1x mode

4x mode

ch 0 even ———————(+)——→ chn 0 out

ch 0 odd

ch 0 even ———————(+)——→ chp 0 out

ch 0 odd

chn 3 out

ch 3 even ———————(+)——→ chp 3 out

NEG

ch 3 odd ——→ [ → ]

1x

4x

FIG. 20

EP 1 032 154 A2